# EUROPÄISCHE PATENTSCHRIFT

(11) **EP 0 487 565 B1**
(45) Veröffentlichungstag und Bekanntmachung des Hinweises auf die Patenterteilung: **03.04.1996**
(21) Anmeldenummer: 90911923.2
(22) Anmeldetag: 09.08.1990
(51) Int. Cl.: H04N 1/08

(54) **VORRICHTUNG ZUM AUTOMATISCHEN AUF- UND ABSPANNEN VON AUFZEICHNUNGSMATERIAL UND BETRIEBSWEISE DER VORRICHTUNG**
DEVICE FOR AUTOMATICALLY CLAMPING AND RELEASING A RECORDING MEDIUM AND ITS OPERATION
DISPOSITIF POUR TENDRE ET LIBERER AUTOMATIQUEMENT UN MATERIAU D'ENREGISTREMENT ET MODE DE FONCTIONNEMENT DE CE DISPOSITIF

(30) Priorität: 17.08.1989 DE 3927162; 20.11.1989 DE 3938480
(43) Veröffentlichungstag der Anmeldung: 03.06.1992
(73) Patentinhaber: Linotype-Hell Aktiengesellschaft, D-65731 Eschborn (DE)
(72) Erfinder: BALZEIT, Ralf, D-2308 Preetz (DE); BEHRENS, Gunnar, D-2300 Kiel-Russee (DE); BLÖHDORN, Gerhard, D-2314 Schönkirchen (DE); LASSEN, Bernd, D-2312 Mönkeberg (DE); PENZA, Hans, D-2308 Preetz (DE); ROTH, Norbert, D-2300 Kiel 14 (DE)
(86) Internationale Anmeldenummer: DE9000613
(87) Internationale Veröffentlichungsnummer: WO9103120

(56) Entgegenhaltungen:
- DE-A- 3 230 676
- DE-B- 2 209 515
- GB-A- 1 158 116
- US-A- 3 343 173
- US-A- 3 908 981
- US-A- 3 966 198
- US-A- 4 268 841

## Beschreibung

Die Erfindung bezieht sich auf das Gebiet der elektronischen Reproduktionstechnik und betrifft eine Vorrichtung und deren Betriebsweise zum automatischen Aufspannen von Filmmaterial auf die Aufzeichnungstrommel eines Reproduktionsgerätes, zur Vakuumsteuerung der Aufzeichnungstrommel und zum Abspannen des durch ein Aufzeichnungsorgan belichteten Filmmaterials von der Aufzeichnungstrommel. Das Reproduktionsgerät ist insbesondere ein Farb-Scanner oder Farb-Recorder.

In der Reproduktionstechnik werden mit Farb-Scannern oder Farb-Recordern Farbauszüge für den Mehrfarbendruck hergestellt. Dazu werden zunächst durch optoelektronische, trichromatische Abtastung einer Farbvorlage Farbsignale gewonnen und diese durch eine Farbkorrektur in Farbauszugssignale umgewandelt. Auf einer Aufzeichnungs-trommel des Farb-Scanners oder Farb-Recorders werden blattförmige Filmmaterialien, auch Filmfahnen oder Filmblätter genannt, aufgespannt und durch ein Aufzeichnungsorgan, das durch die FarbauszugsSignale helligkeitsmoduliert ist, punkt- und zeilenweise belichtet. Die belichteten Filmfahnen werden von der Aufzeichnungstrommel abgespannt und entwickelt. Die entwickelten Filmfahnen sind die Farbauszüge für den Mehrfarbendruck.

Die zu belichtenden Filmfahnen unterschiedlichen Formats können bereits als Blattfilmmaterial vorliegen, das zum Aufspannen einer Blattfilm-Kassette entnommen wird, oder vor der Aufspannung von einem in einer Rollfilm-Kassette befindlichen Rollfilmmaterial abgeschnitten werden.

Die zu belichtenden Filmfahnen werden bei herkömmlichen Farb-Scannern oder Farb-Recordern manuell auf die Aufzeichnungstrommel aufgespannt und dort entweder mit Klebeband oder durch eine Vakuum-Ansaugung fixiert.

Für einen effektiven und wirtschaftlichen Einsatz eines Farb-Scanners oder Farb-Recorders ist es erforderlich, den Wirkungsgrad insbesondere durch Verkürzen der Vorbereitungs- und Einstellzeiten am Farb-Scanner gegenüber den für die eigentliche Filmbelichtung benötigten Zeiten zu erhöhen. Die Vorbereitungs- und Einstellzeiten lassen sich beispielsweise dadurch reduzieren, daß die optimalen Einstellparameter für eine gute Reproduktion mittels Arbeitsvorbereitungs-Geräten (AV-Geräten) von einem Bediener in einem Vorprozeß ermittelt und gespeichert werden und dann unmittelbar vor der Filmbelichtung in kurzer Zeit in den Farb-Scanner übertragen werden. Gleichzeitig müssen möglichst viele, normalerweise vom Bediener auszuführende Arbeitsschritte wie beispielsweise das Auf- und Abspannen der Filmfahnen auf die bzw. von der Aufzeichnungstrommel und die Vakuum-Ansaugung der Filmfahnen auf der Aufzeichnungstrommel automatisiert werden.

Hinzu kommt der Wunsch, Filmfahnen unterschiedlicher Formate, insbesondere großformatige Filmfahnen, beispielsweise zur Reproduktion von Postern, belichten zu können.

Aus der DE-B-22 09 515 ist bereits ein elektronisches Reproduktionsgerät mit einer Vorrichtung zum Aufspannen von blattförmigem Aufzeichnungsmaterial auf eine Aufzeichnungstrommel mit Vakuumansaugung und zum Abspannen des belichteten Aufzeichnungsmaterials bekannt.

Die zu belichtenden Filmfahnen, die sich in einer Blattfilm-Kassette befinden, werden bei dem bekannten Reproduktionsgerät mittels eines manuell betätigbaren Rollen- und Hebelmechanismus mit den Registerlochungen über Registerstifte gehängt, die sich auf der Aufzeichnungstrommel befinden. Dann wird die Vakuum-Pumpe eingeschaltet und die Aufzeichnungstrommel gedreht, wodurch die Filmfahnen aus der Blattfilm-Kassette gezogen, um die drehende Aufzeichnungstrommel gewickelt und durch das Vakuum auf der Trommeloberfläche fixiert werden. Nach der Belichtung werden die Filmfahnen abgespannt und durch den Rollen- und Hebelmechanismus wieder in die Rollfilm-Kassette zurücktransportiert.

Die Aufzeichnungstrommel ist ein Hohlzylinder, der durch Deckel verschlossen ist. An den Deckeln sind Wellenzapfen befestigt, mit denen die Aufzeichnungstrommel am Geräteträger des Reproduktionsgerätes drehbar gelagert ist. Die Wandung des Hohlzylinders ist mit Sauglöchern zur Ansaugung der Filmfahnen an die Trommeloberfläche versehen. Die Sauglöcher stehen mit dem Trommelinnenraum in Verbindung. Ein Wellenzapfen ist hohl, wodurch ein Saugkanal entsteht, der den Trommelinnenraum über eine am Wellenzapfen befestigte Drehdurchführung und eine ortsfeste Saugleitung mit einer stationären Vakuum-Pumpe verbindet.

Die aus der DE-B-22 09 515 bekannte Vorrichtung hat den Nachteil, daß nur mit Registerlochungen versehene Filmfahnen vorgegebener Formate aufgespannt werden können und daß das Auf- und Abspannen nur unter Mitwirkung des Bedieners erfolgen kann.

Aus der US-A-4,268,841 ist ein weiteres elektronisches Reproduktionsgerät bekannt, das bereits eine Vorrichtung zum automatischen Aufspannen von blattförmigem Aufzeichnungsmaterial auf eine Aufzeichnungstrommel, zur Vakuum-ansaugung des Aufzeichnungsmaterials an die Aufzeichnungstrommel und zum automatischen Abspannen des belichteten Aufzeichnungsmaterials von der Aufzeichnungstrommel aufweist. Das blattförmige Aufzeichnungsmaterial wird von einer Versorgungsstation automatisch über eine Transporteinrichtung zur Aufzeichnungstrommel transportiert, mit Hilfe eines Ringkanals zwischen Trommeloberfläche und Gehäusewand um die Aufzeichnungstrommel gewickelt und dort durch Vakuumansaugung fixiert. Nach der Belichtung wird das Aufzeichnungsmaterial ebenfalls automatisch von der Aufzeichnungstrommel abgespannt und einer Austrittsöffnung im Gerät zur Weiterverarbeitung zugeführt. Die Mantelfläche der Aufzeichnungstrommel ist mit in Rotationsrichtung angeordneten Sauglöchern versehen, die über den Innenraum der Aufzeichnungstrommel und eine Saugleitung in der Welle mit einer stationären Vakuumpumpe verbunden sind. In der Saugleitung befindet sich eine Vakuum-Steuereinrichtung, mit der das Vakuum für die Sauglöcher ein- und ausgeschaltet oder auf einen Zwischenwert eingestellt werden kann.

Die aus der US-A-4,268,841 bekannte Vorrichtung hat den Nachteil, daß nur blattförmiges Aufzeichnungsmaterial auf- und abgespannt werden kann und daß keine speziellen Maßnahmen angegeben sind, die einen reibungslosen, automatischen Ablauf des Auf- und Abspannens garantieren.

Beide bekannten Vorrichtungen haben den weiteren Nachteil, daß beim Einschalten der Vakuum-Pumpe zu Beginn des Aufspannvorganges alle Sauglöcher der Aufzeichnungstrommel gleichzeitig mit Vakuum beaufschlagt werden. Dadurch entstehen insbesondere bei kleinformatigen Filmfahnen hohe Vakuumverluste, da nur eine geringe Anzahl von Sauglöchern durch die Filmfahne bedeckt wird. Durch die hohen Vakuumverluste ist dann kein sicheres Aufspannen der Filmfahnen und keine sichere Fixierung der Filmfahnen während der Belichtungszeit, in der sich die Aufzeichnungstrommel mit hoher Geschwindigkeit dreht, gewährleistet. Die Saugwirkung und damit die Fixierung der Filmfahnen kann zwar durch die Installation einer Vakuum-Pumpe mit höherer Nennleistung verbessert werden, dies wäre aber aufwendig.

Zur Verringerung der Vakuumverluste ist es schon bekannt, jeweils die von der momentan aufgespannten Filmfahne nicht abgedeckten Sauglöcher durch Klebestreifen abzudichten oder eine Aufzeichnungstrommel zu verwenden, bei der die nicht abgedeckten Sauglöcher selbsttätig mit Ventilen verschlossen werden. Die Abdichtung der Sauglöcher durch Klebestreifen ist zeitraubend und durch selbsttätig arbeitende Ventile aufwendig und unsicher.

Es ist auch schon bekannt, die Aufzeichnungstrommel durch Querwände in einzelne zuschaltbare Vakuumkammern zu unterteilen. In diesem Fall läßt sich eine Verringerung der Vakuumverluste dadurch erreichen, daß jeweils nur diejenigen Vakuumkammern aktiviert werden, die von der axialen Formatlänge her momentan an der Fixierung der Filmfahnen beteiligt sind.

Aus der DE-A-32 30 676 ist eine Vakuum-Aufspannvorrichtung bekannt, die zur Fixierung von blattförmigem Aufzeichnungsmaterial auf einer Aufzeichnungstrommel eine Kombination aus pneumatischen und mechanischen Komponenten verwendet. Die Sauglöcher der Aufzeichnungstrommel sind in mindestens zwei Gruppen zusammengefaßt, von denen eine oder mehrere Reihen von untereinander verbundenen Sauglöchern umfaßt. Die einzelnen Saugloch-Gruppen stehen durch Leitungen untereinander in Verbindung, die durch Ventile abschaltbar sind. Mindestens eine Saugloch-Gruppe ist an eine stationäre Vakuumerzeugung angeschlossen.

Durch Zuschalten einzelner Saugloch-Gruppen oder Saugloch-Reihen wird erreicht, daß Aufzeichnungsmaterial verschiedener Formate ohne hohe Vakuumverluste aufgespannt werden kann. Mittel zur Steuerung der Ventile und zum Transport des Aufzeichnungsmaterials zu oder von der Aufzeichnungstrommel sind nicht angegeben.

Die aus der DE-A-32 30 676 bekannte Vorrichtung hat somit den Nachteil, daß die Zuführung des blattförmigen Aufzeichnungsmaterials von Hand erfolgen muß und daß die Umschaltung der Saugloch-Gruppen oder -Reihen nicht automatisch in Abhängigkeit vom Auf- und Abspannvorgang und/oder vom jeweiligen Format des aufzuspannenden Aufzeichnungsmaterials erfolgt.

In der Reproduktionstechnik geht die Tendenz dahin, ungelochtes Rollfilmmaterial zu verwenden und die jeweils erforderlichen Filmlängen von dem Rollfilmmaterial abzuschneiden und aufzuspannen. Hinzu kommt der Wunsch, beliebige Formate auf- und abspannen zu können. Die Praxis hat gezeigt, daß es schwierig ist, insbesondere großformatige Filmfahnen genau und faltenfrei auf die Aufzeichnungstrommel aufzuspannen. Das genaue und glatte Aufspannen der Filmfahnen ist aber eine unerläßliche Voraussetzung für die Belichtung von passergenauen Farbauszügen und für die Herstellung qualitativ hochwertiger Mehrfarbendrucke.

Der Erfindung liegt daher die Aufgabe zugrunde, eine Vorrichtung und deren Betriebsweise zum automatischen Auf- und Abspannen von ungelochtem Aufzeichnungsmaterial unterschiedlicher Formate auf die bzw. von der Aufzeichnungstrommel eines Reproduktionsgerätes und zum automatischen Fixieren des Aufzeichnungsmaterials auf der Aufzeichnungstrommel durch Vakuum-Ansaugung anzugeben, durch die ein sicheres und glattes Aufspannen, eine sichere Fixierung bei wirtschaftlicher Vakuumerzeugung und ein sicheres Abspannen des Aufzeichnungsmaterials gewährleistet ist, so daß stets ein reibungsloser Arbeitsablauf und eine hohe Reproduktionsqualität erreicht wird.

Diese Aufgabe wird in bezug auf die Vorrichtung durch die Merkmale des Patentanspruchs 1 und in bezug auf die Betriebsweise durch die Merkmale des Patentanspruchs 22 gelöst. Vorteilhafte Weiterbildungen sind in den Unteransprüchen angegeben.

Die Erfindung wird im folgenden anhand der Figuren 1 bis 17 näher erläutert.

Es zeigen:
- Fig. 1: den prinzipiellen Aufbau einer Vorrichtung zum automatischen Auf- und Abspannen von Aufzeichnungsmaterial auf die bzw. von der Aufzeichnungstrommel eines Farb-Recorders im Schnittbild;
- Fig. 2: die Betriebsweise der Vorrichtung zu Beginn des Aufspannvorgangs, bei dem sich die Aufzeichnungstrommel in einer Aufspann-Startposition befindet;
- Fig. 3: die Betriebsweise der Vorrichtung beim Aufspannvorgang zum Zeitpunkt, in dem eine Filmschlaufe gebildet wird;
- Fig. 4: die Betriebsweise der Vorrichtung beim Aufspannvorgang nach Abschneiden einer Filmfahne von einer Filmbahn;
- Fig. 5: die Betriebsweise der Vorrichtung beim Aufspannvorgang während des Fixierens der abgeschnittenen Filmfahne auf der Aufzeichnungstrommel;
- Fig. 6: die Betriebsweise der Vorrichtung zu Beginn des Abspannvorgangs, bei dem sich die Aufzeichnungstrommel in einer Abspann-Startposition befindet;
- Fig. 7: die Betriebsweise der Vorrichtung beim Abspannvorgang während des Abschälens der belichteten Filmfahne von der Aufzeichnungs-trommel;
- Fig. 8: den prinzipiellen Aufbau der Aufzeichnungstrommel mit Vakuum-Verteiler zur Vakuum-Steuerung;
- Fig. 9: die Betriebsweise des Vakuum-Verteilers zu Beginn des Aufspannvorganges, bei dem sich die Aufzeichnungstrommel in der Aufspann-Startposition befindet;
- Fig. 10: die Betriebsweise des Vakuum-Verteilers beim Aufspannvorgang während des Fixierens der abgeschnittenen Filmfahne auf der Aufzeichnungstrommel;
- Fig. 11: die Betriebsweise des Vakuum-Verteilers am Ende des Aufspannvorganges;
- Fig. 12: die Betriebsweise des vakuum-Verteilers zu Beginn der Belichtungs-Phase;
- Fig. 13: die Betriebsweise des Vakuum-Verteilers beim Abspann-vorgang;
- Fig. 14: die Betriebsweise des Vakuum-Verteilers am Ende der Abspann-Phase;
- Fig. 15: ein Ausführungsbeispiel für die Aufzeichnungstrommel mit Vakuum-Verteiler;
- Fig. 16: die Steuerung der Ventile; und
- Fig. 17: ein weiteres Ausführungsbeispiel für die Aufzeichnungstrommel mit Vakuum-Verteiler.

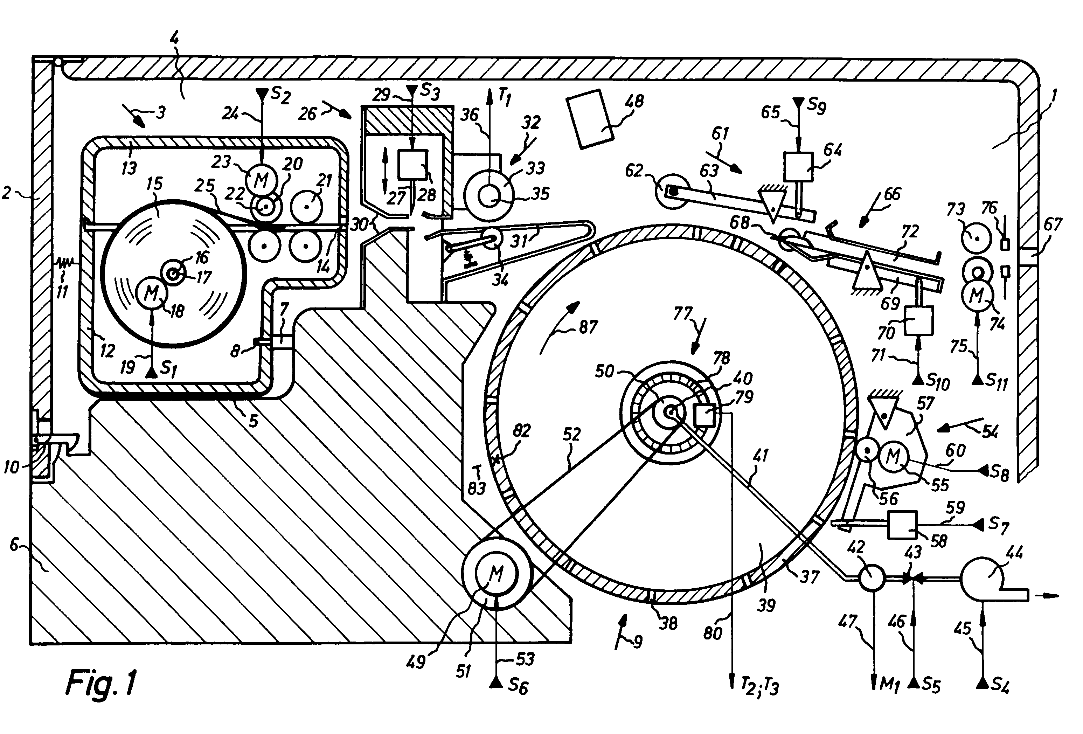

Fig. 1 zeigt als Schnittbild den prinzipiellen Aufbau einer Vorrichtung zum automatischen Auf- und Abspannen von Aufzeichnungsmaterial auf die bzw. von der Aufzeichnungstrommel eines Farb-Recorders, von dem lediglich die Aufzeichnungstrommel, der Dunkelraum für die Belichtung und ein Teil des Geräteträgers dargestellt sind.

Der Dunkelraum 1 des Farb-Scanners weist an der linken Seite eine lichtdicht schließende Ladeklappe 2 auf. Durch die geöffnete Ladeklappe 2 wird eine Rollfilm-Kassette 3 als Geber-Kassette in ein Kassetten-Einschubfach 4 des Farb-Recorders eingeschoben und auf einer Ladebühne 5 des Geräteträgers 6 abgesetzt. Mit Hilfe von im Geräteträger 6 befestigten Zentrierstiften 7 und entsprechenden Zentrierbohrungen 8 in der Wandung der Rollfilm-Kassette 3 wird diese genau zum Geräteträger 6 und zu einer Aufzeichnungstrommel 9 des Farb-Recorders ausgerichtet. Nach Schließen und Verriegeln der Ladeklappe 2 mittels der Verriegelung 10 wird die Rollfilm-Kassette 3 durch Federn 11 an die Zentrierstifte 7 angedrückt und in dem Kassetten-Einschubfach 4 fixiert. Die Rollfilm-Kassette 3, die aus einem Unterteil 12 und einem abnehmbaren, lichtdicht schließenden Deckel 13 besteht, weist eine schlitzförmige Filmdurchtritts-Öffnung 14 auf.

Die Rollfilm-Kassette 3 wurde außerhalb des Farb-Scanners durch den geöffneten Deckel 13 mit einer Filmrolle 15 vorgegebener Breite bestückt, indem der Hohlkern der Filmrolle 15 auf einer innerhalb der Rollfilm-Kassette 3 gelagerten Welle 16 befestigt wurde. Ein Ende der Welle 16 ist durch eine Bohrung in der Wandung der Rollfilm-Kassette 3 nach außen geführt und dort mit einem Antriebsrad 17 versehen.

Beim Einbringen der Rollfilm-Kassette 3 in das Kassetten-Einschubfach 4 wird das Antriebsrad 17 an einen Wickel-Motor 18 angekoppelt, der ortsfest am Geräteträger 6 befestigt und durch ein Steuersignal S₁ auf einer Leitung 19 gesteuert wird. Innerhalb der Rollfilm-Kassette 3 befinden sich in der Höhe der Filmdurchtritts-Öffnung 14 ein Filmtransport-Rollenpaar 20 und ein Dichtungs-Rollenpaar 21, von denen jeweils eine Rolle an der Wand des Deckels 13 und die andere Rolle an der Wand des Unterteils 12 drehbar gelagert sind. Das Wellenende einer Rolle des Filmtransport-Rollenpaares 20 ist aus der Rollfilm-Kassette 3 herausgeführt und mit einem Antriebsrad 22 versehen, das beim Einschieben der Rollfilm-Kassette 3 mit einem ortsfesten Filmtransport-Motor 23 gekoppelt wird. Der Filmtransport-Motor 23 ist durch ein Steuersignal S₂ auf einer Leitung 24 steuerbar. Das Dichtungs-Rollenpaar 21 dichtet den Kassetteninnenraum lichtmäßig gegenüber der Filmdurchtritts-Öffnung 14 ab. Die Länge des Filmtransport-Rollenpaares 20, des Dichtungs-Rollenpaares 21 und der Filmdurchtritts-Öffnung 14 entspricht der maximal möglichen Breite der Filmrolle 15, die sich wiederum nach der konstruktiven Länge der Aufzeichnungstrommel 9 richtet.

Bei Bestücken der Rollfilm-Kassette 3 wurde der Anfang der Filmrolle 15 in das Filmtransport-Rollenpaar 20 eingefädelt. Der Wickel-Motor 18 arbeitet zusätzlich als elektrische Feder, indem er durch permanente Erregung ein kleines Gegendrehmoment zum Drehmoment des Filmtransport-Motors 23 erzeugt, so daß die Filmbahn 25 zwischen Filmtransport-Rollenpaar 20 und der Filmrolle 15 stets leicht gespannt ist.

Die Auf- und Abspannvorrichtung weist weiterhin eine Film-Schneidevorrichtung 26 mit einem Schneidemesser 27 auf, die vor der Filmdurchtritts-Öffnung 14 der Rollfilm-Kassette 3 angeordnet und am Geräteträger 6 befestigt ist. Das Schneidemesser 27 wird von einem geeigneten Stellorgan 28 betätigt, das durch ein Steuersignal S₃ auf einer Leitung 29 gesteuert wird. Das Schneidemesser 27 kann als Schlagmesser von der Breite der Filmbahn 25, das durch das Stellorgan 28 abgesenkt wird, oder als Kreismesser ausgeführt sein, das durch das Stellorgan 28 senkrecht zur Filmbahn 25 geführt wird und diese der Breite nach durchtrennt. Die Filmbahn 25 wird durch die Film-Schneidevorrichtung 26 mit Hilfe von Leitflächen 30 und 31 transportiert. Die Film-Schneidevorrichtung 26 hat die Aufgabe, von der Filmbahn 25 jeweils die momentan aufzuspannende und zu belichtende Filmfahne vorgegebener Länge abzutrennen.

Hinter der Film-Schneidevorrichtung 26 ist eine Filmlängen-Meßvorrichtung 32 vorgesehen, mit der die Länge der durchlaufenden Filmbahn 25 gemessen wird. Die Filmlängen-Meßvorrichtung 32 besteht aus einem Meßrad 33, einem federnd gelagerten Stützrad 34 und einem mit dem Meßrad 33 gekoppelten Drehimpulsgeber 35. Das Stützrad 34 ragt durch eine Öffnung in der Leitfläche 31 und drückt die Filmbahn 25 beim Durchlauf an das Meßrad 33 an. Beim Transport der Filmbahn 25 durch die Filmlängen-Meßvorrichtung 32 führt das Meßrad 33 eine Drehbewegung aus, die auf den Drehimpulsgeber 35 übertragen wird. Der Drehimpulsgeber 35 erzeugt auf einer Leitung 36 eine Meßtaktfolge T₁, deren Taktzahl ein Maß für die Länge der durchlaufenen Filmbahn 25 ist.

Die Aufzeichnungstrommel 9 ist ein Hohlzylinder 37, dessen Stirnseiten verschlossen sind. An den Stirnseiten sind Wellenstümpfe befestigt, mit denen die Aufzeichnungstrommel 9 am Geräteträger 6 drehbar gelagert ist, was in Fig. 1 nicht näher dargestellt ist. Die Wandung des Hohlzylinders 37 ist mit Sauglöchern 38 versehen, welche mit einem nicht sichtbaren Vakuum-Verteiler verbunden sind. Einer der Wellenstümpfe ist hohl, wodurch ein Vakuumkanal entsteht, der den Vakuum-Verteiler über ein an dem Wellenstumpf befindliches Vakuum-Verbindungsstück 40 mit einer ortsfesten Saugleitung 41 verbindet. Die Saugleitung 41 ist über ein Vakuum-Messer 42 und ein steuerbares Nebenluft-Ventil 43 an eine Vakuum-Pumpe 44 angeschlossen. Die Vakuum-Pumpe 44 wird über ein Steuersignal S₄ auf einer Leitung 45 ein- und ausgeschaltet. Ein weiteres Steuersignal S₅ auf einer Leitung 46 betätigt das Nebenluft-Ventil 43. Der gemessene Vakuumwert wird von dem Vakuummesser 42 als Meßsignal M₁ über eine Leitung 47 abgegeben.

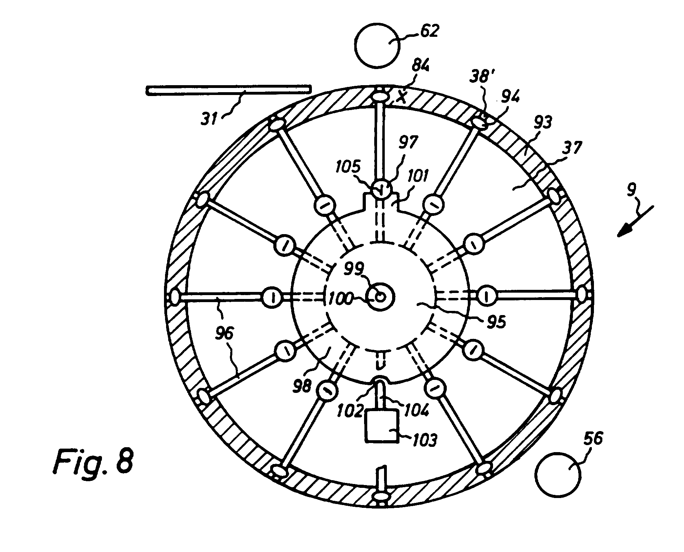

Die Sauglöcher 38 sind in axial zur Aufzeichnungstrommel 9 verlaufenden Reihen ausgerichtet. Die umfangsmäßigen Abstände der Saugloch-Reihen sind in zweckmäßger Weise an die gängigen Formatlängen der aufzuspannenden Filmfahnen angepaßt, d. h. die Abstände der Saugloch-Reihen sind so gewählt, daß Anfänge und Enden der Filmfahnen unterschiedlicher Formate jeweils im Bereich einer Saugloch-Reihe liegen. Der genaue Aufbau der Aufzeichnungstrommel und des Vakuum-Verteilers sowie dessen Betriebsweise werden in den Fig. 8 bis 17 weiter erläutert.

Während der Belichtung der aufgespannten Filmfahnen durch ein Aufzeichnungsorgan 48 wird die Aufzeichnungstrommel 9 von einem Haupt-Motor 49 über einen Riemen-Antrieb angetrieben, der aus einer mit der Aufzeichnungstrommel 9 verbundenen Riemenscheibe 50, einer mit dem Haupt-Motor 49 verbundenen Riemenscheibe 51 und einem Riemen 52 besteht. Der Haupt-Motor 49 wird von einem Steuersignal S₆ auf einer Leitung 53 gesteuert.

Zur Positionierung der Aufzeichnungstrommel 9 während des Aufspannens und Abspannens der Filmfahnen ist ein verschwenkbarer Positionier-Antrieb 54 vorhanden. Der Positionier-Antrieb 54 besteht aus einem Hilfs-Motor 55 und einem vom Hilfs-Motor 55 angetriebenen Reibrad 56. Der Hilfs-Motor 55 und das Reibrad 56 sind auf einer drehbar gelagerten Trägerplatte 57 montiert, die durch ein Stellorgan 58 derart positionierbar ist, daß das Reibrad 56 entweder, wie in Fig. 1 gezeigt, an der Trommeloberfläche anliegt oder abgeschwenkt ist. Das Stellorgan 58 wird durch ein Steuersignal S₇ auf einer Leitung 59 betätigt. Der Hilfs-Motor 55 läßt sich durch ein weiteres Steuersignal S₈ auf einer Leitung 60 ein- und ausschalten.

Zum Andrücken der Filmfahnen an die Aufzeichnungstrommel 9 ist eine verschwenkbare Andruck-Vorrichtung 61 vorgesehen, die in dem Bereich angeordnet ist, in dem jeweils der Anfang der aufzuspannenden Filmfahne die Trommeloberfläche berührt. Die Andruck-Vorrichtung 61 besteht aus einer Andruckrolle 62, die an einem um einen ortsfesten Drehpunkt schwenkbaren Hebel 63 drehbar gelagert ist, und einem Stellorgan 64. Das Stellorgan 64, das durch ein Steuersignal S₉ auf einer Leitung 65 aktiviert wird, verschwenkt den Hebel 63 derart, daß die Andruckrolle 62 entweder an der Trommeloberfläche anliegt oder die dargestellte Ruhestellung einnimmt.

Zum Abheben der belichteten Filmfahnen von der Aufzeichnungstrommel 9 ist eine ebenfalls verschwenkbare Abhebe-Vorrichtung 66 vorgesehen, die in dem Bereich des Dunkelraumes 1 angeordnet ist, in dem die belichteten Filmfahnen durch eine schlitzförmige Filmaustritts-Öffnung 67 aus dem Dunkelraum 1 transportiert werden. Die Abhebe-Vorrichtung 66 weist einen Abhebefinger 68 auf, der an einem um einen ortsfesten Drehpunkt verschwenkbaren Hebel 69 befestigt ist. Mittels eines weiteren Stellorgans 70 läßt sich der Hebel 69 so verschwenken, daß der Abhebefinger 68 in eine nicht sichtbare Umfangsnut in der Aufzeichnungstrommel 9 eintaucht. Das Stellorgan 70 wird durch ein Steuersignal S₁₀ auf einer Leitung 71 betätigt.

Die Abhebe-Vorrichtung 66 weist ferner einen Leitkanal 72 auf, durch den die belichteten und von der Aufzeichnungstrommel 9 mittels des Abhebefingers 68 abgehobenen Filmfahnen zu einem Transport-Rollenpaar 73 im Bereich der Filmaustritts-Öffnung 67 geleitet werden. Das Transport-Rollenpaar 73, welches die Filmfahnen aus dem Dunkelraum 1 transportiert, wird durch einen Transport-Motor 74 angetrieben, der durch ein Steuersignal S₁₁ auf einer Leitung 75 ein-und ausgeschaltet wird.

An die Filmaustritts-Öffnung 67 ist entweder eine Nehmer-Filmkassette oder der Transportkanal einer externen Filmentwicklungsstation lichtdicht anschließbar, um die durch die Filmaustritts-Öffnung 67 transportierten belichteten Filmfahnen aufzunehmen oder gleich weiterzuverarbeiten.

Im Dunkelraum 1 ist vor der Filmaustritts-Öffnung 67 eine Lichtschranke 76 angeordnet, mit deren Hilfe der Transport der belichteten Filmfahnen aus dem Dunkelraum 1 überwacht, gegebenenfalls der Antrieb des Transportkanals der externen Entwicklungsstation gestartet und das Aufspannen der nächsten Filmfahne freigegeben wird.

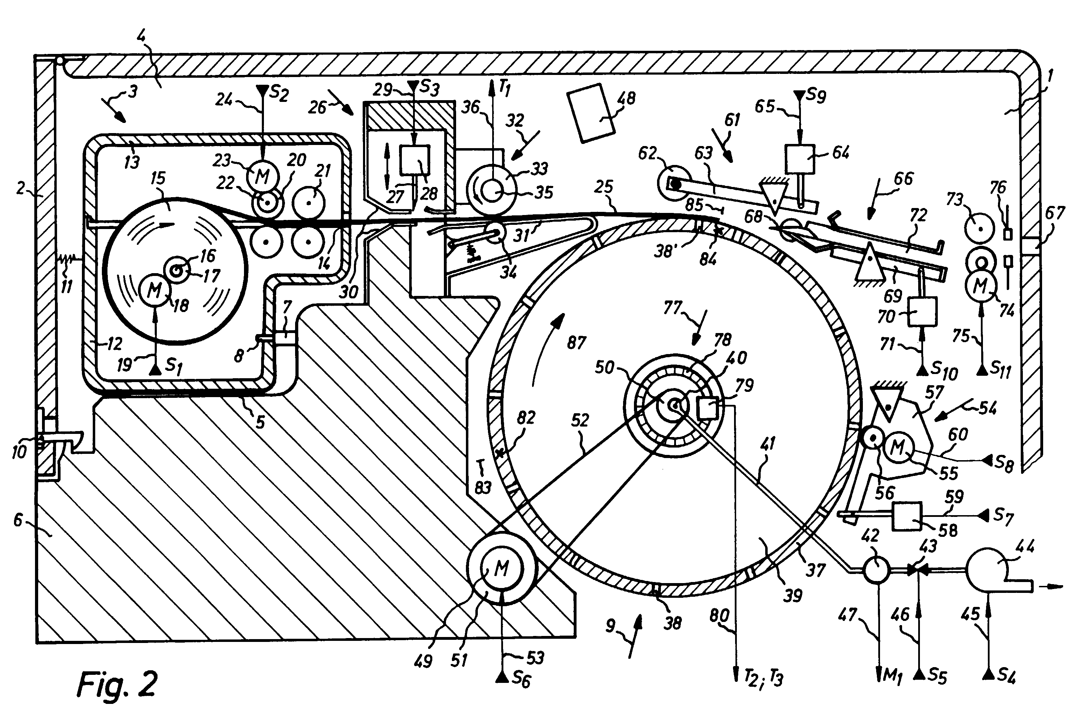

Vor dem Aufspannen, der Belichtung und dem Abspannen der Filmfahnen muß die Aufzeichnungstrommel 9 mittels des Positionier-Antriebs 54 in definierte Umfangspositionen gedreht werden. Solche definierten Umfangspositionen sind die Aufspann-Startposition, die Belichtungs-Startposition und die Abspann-Startposition, die im Zusammenhang mit der Beschreibung der Wirkungsweise der Vorrichtung anhand der Fig. 2 bis 7 näher definiert werden sollen sowie eine Referenz-Position der Aufzeichnungstrommel 9.

Zum Feststellen der jeweiligen Umfangsposition der Aufzeichnungstrommel 9 ist ein Positions-Geber 77 vorgesehen, der beispielsweise aus einer an der Aufzeichnungstrommel 9 befestigten Rasterschreibe 78 und einem ortsfesten optoelektronischen Abtaster 79 besteht. Der Abtaster 79 erzeugt durch Abtasten der Rasterschei be 78 auf einer Leitung 80 einen Umfangsimpuls T₂ pro Umdrehung der Aufzeichnungstrommel 9 und eine laufende Zähltaktfolge T₃, deren Taktzahl ein Maß für die jeweilige Umfangsposition der Aufzeichnungstrommel 9 ist.

In der Referenz-Position der Aufzeichnungstrommel 9 ist eine an der Aufzeichnungstrommel 9 befestigte Referenzmarke 82 mit einer ortsfesten Referenzmarke 83 in Deckung. Die Rasterscheibe 78 ist so justiert, daß der Umfangsimpuls T₂ jeweils dann abgegeben wird, wenn sich die Aufzeichnungstrommel 9 in der Referenz-Position befindet.

Der Umfangsimpuls T₂ und die Zähltaktfolge T₃ auf der Leitung 80 sowie die Meßtaktfolge T₁ auf der Leitung 36 und das Meßsignal M₁ auf der Leitung 47 werden einer nicht dargestellten Steuer-Schaltung zugeführt, in der sämtliche Steuersignale S₁ bis S₁₁ erzeugt werden.

Zur Festlegung der Aufspann-Startposition, der Belichtungs-Startposition und der Abspann-Startposition enthält die Steuer-Schaltung mehrere Positions-Zähler, in welche die Zähltaktfolge T₃ eingezählt wird und die durch den Umfangsimpuls T₂ rückgesetzt werden, so daß die momentan gezählte Taktzahl während einer Umdrehung die momentane Umfangsposition der Aufzeichnungstrommel, ausgehend von der Referenz-Position, angibt.

Die Steuer-Schaltung enthält außerdem mehrere Positions-Speicherregister, in die die der Aufspann-Startposition, der Belichtungs-Startposition und der Abspann-Startposition entsprechenden Taktzahlen eingegeben und gespeichert werden. Die gespeicherten Taktzahlen und die in den Positions-Zählern eingezählten Taktzahlen werden laufend miteinander verglichen und bei Gleichheit entsprechende Signale erzeugt, welche das Erreichen der jeweiligen Umfangspositionen signalisieren.

Die Steuer-Schaltung enthält ferner mehrere Längen-Zähler, in die die Meßtaktfolge T₁ von der Filmlängen-Meßvorrichtung 32 eingezählt wird, und entsprechende Längen-Speicherregister, in denen vorgegebene Längen als Taktzahlen gespeichert werden.

Diese gespeicherten Taktzahlen werden wiederum mit den gezählten Taktzahlen der Meßtaktfolge T1 verglichen, um das Erreichen der vorgegebenen Länge zu signalisieren.

Die vorgegebenen Längen sind die jeweilige Länge L₁ der von der Filmbahn 25 abzuschneidenden Filmfahne, der gerätebedingte konstante Abstand L₂ des Schneidepunktes unter dem Schneidemesser 27 der Film-Schneidevorrichtung 26 von dem Meßpunkt unter dem Meßrad 33 der Filmlängen-Meßvorrichtung 32 in der Filmbahn-Ebene, der ebenfalls konstante Abstand L₃ vom Meßpunkt zu einer Aufspann-Marke auf der Aufzeichnungstrommel 9, wenn diese sich in der Aufspann-Position befindet, sowie die Länge L₄ einer zu bildenden Filmschlaufe.

Nachdem der Aufbau der Vorrichtung anhand der Fig. 1 beschrieben wurde, soll nun die Betriebsweise der Vorrichtung in den einzelnen Phasen des Auf- und Abspannens der Filmfahnen anhand der Fig. 2 bis 7 näher erläutert werden.

Fig. 2 zeigt die Betriebsweise der Vorrichtung zu Beginn des Aufspannvorganges, bei dem sich die Aufzeichnungstrommel 9 in einer Aufspann-Startposition befindet.

Nachdem die Länge L1 der momentan von der Filmbahn 25 abzuschneidenden bzw. zu belichtenden Filmfahne in das entsprechende Längen-Speicherregister der Steuer-Schaltung eingegeben wurde, wird die Aufzeichnungstrommel 9 zunächst mit Hilfe des Positionier-Antriebs 54 in die Aufspann-Startposition gedreht und in die Filmbahn 25 bis zu einer Aufspann-Marke 84 der Aufzeichnungstromel 9 transportiert.

Die Aufspann-Marke 84 markiert diejenige Mantellinie der Aufzeichnungstrommel 9, auf der jeweils der Anfang der zur Aufzeichnungstrommel 9 transportierten Filmbahn 25 liegen soll. Diese Aufspann-Marke 84 ist in zweckmäßiger Weise in der Nähe einer Saugloch-Reihe 38' angebracht, so daß jeweils der Anfangsbereich der Filmbahn 25 über der Saugloch-Reihe '38 liegt und an die Trommeloberfläche angesaugt wird.

In der Aufspann-Startposition der Aufzeichnungstrommel 9 ist die Aufspann-Marke 84 mit einer gedachten ortsfesten Bezugsmarke 85 in Deckung. Die Aufspann-Startposition ist so gewählt, daß die Aufspann-Marke 84 im Bereich der Andruckrolle 62 liegt, in dem der Anfang der durch die Leitfläche 31 zur Aufzeichnungstrommel 9 geführten Filmbahn 25 mit der Trommeloberfläche in Berührung kommt.

Um die Aufzeichnungstrommel 9 in diese Aufspann-Startposition zu drehen, wird der Hilfs-Motor 55 durch das Steuersignal S₈ auf der Leitung 60 gestartet, die Umfangspositionen durch den Positions-Geber 77 festgestellt, und der Hilfs-Motor 55 bei Erreichen der Aufspann-Startposition wieder gestoppt. Das Reibrad 56 des Positionier-Antriebs 54 bleibt angeschwenkt, um die Aufzeichnungstrommel 9 in der Aufspann-Startposition festzuhalten.

Danach wird der Filmtransport-Motor 23 durch das Steuersignal S₂ auf der Leitung 24 eingeschaltet und die Filmbahn 25 mittels des Filmtransport-Rollenpaares 22 durch das Dichtungs-Rollenpaar 21, die Film-Schneidevorrichtung 26 und die Filmlängen-Meßvorrichtung 32 und über die Leitfläche 31 zur Aufzeichnungstrommel 9 transportiert. Bei Eintritt des Anfangs der Filmbahn 25 in die Filmlängen-Meßvorrichtung 32 beginnt diese, die durchlaufende Filmlänge zu messen. Wenn die gemessene Länge der Filmbahn 25 gleich dem konstanten Abstand L₃ zwischen Meßpunkt und Aufspann-Marke 84 auf der Aufzeichnungstrommel 9 ist, wird der Filmtransport-Motor 23 gestoppt. Dann befindet sich der Anfang der Filmbahn 25, wie in Fig. 2 dargestellt, an der Aufspann-Marke 84 und der Anfangsbereich der Filmbahn 25 über der Saugloch-Reiche 38'.

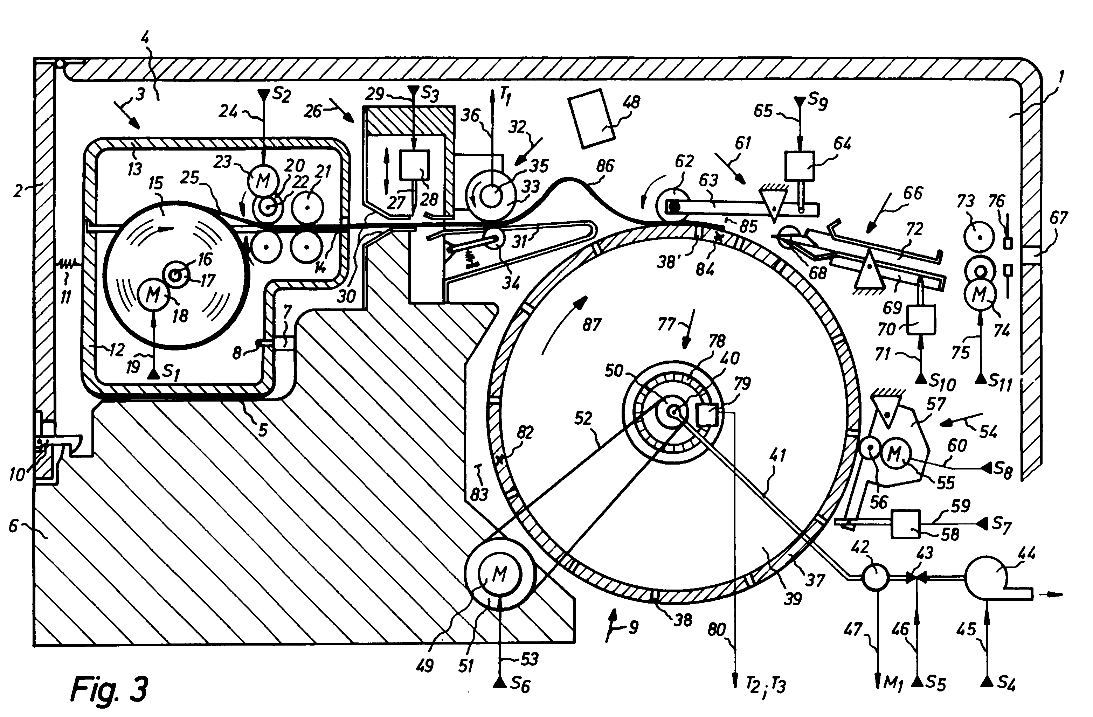

Fig.3 zeigt die Betriebsweise der Vorrichtung beim Aufspannvorgang zum Zeitpunkt, in dem eine Filmschlaufe gebildet wird.

Nach dem Transport der Filmbahn 25 zur Aufspann-Marke 84 wird die Andruckrolle 62 der Andruck-Vorrichtung 61 durch das Steuersignal S₉ auf der Leitung 65 abgesenkt, wodurch der Anfangsbereich der Filmbahn 25 an die Trommeloberfläche angedrückt wird. Jetzt wird das Vakuum durch Einschalten der Vakuum-Pumpe 44 mit dem Steuer-signal S4 auf der Leitung 45 aufgebaut und der Anfangsbereich der Filmbahn 25 auf der Trommeloberfläche durch das Vakuum fixiert. Dabei ist das Neben luft-Ventil 43 geschlossen, so daß das Vakuum mit seinem vollen Nennwert wirksam wird. Das Erreichen des vollen Nennwertes wird mit Hilfe des Vakuummessers 42 überprüft, indem das Meßsignal M₁ auf der Leitung 47 in der Steuer-Schaltung mit einem Soll-Nennwert verglichen wird.

Sollte sich bei der Messung des Vakuums herausstellen, daß der Vakuum-Nennwert nicht erreicht wurde, wird der bisherige Ablauf rückgängig gemacht, indem die Andruckrolle 62 angehoben, das Vakuum abgeschaltet und die Filmbahn 25 mit Hilfe des Filmtransport-Motors 23 wieder in die Rollfilm-Kassette 3 zurücktransportiert wird, bis der Anfang der Filmbahn 25 die in Fig. 1 gezeigte Position zwischen dem Filmtransport-Rollenpaar 22 erreicht hat. Beim Rückspulen der Filmbahn 25 in die Rollfilm-Kassette 3 wird gleichzeitig der Wickel-Motor 18 durch das Steuer-Signal S₁ auf der Leitung 19 gestartet, welcher die rücktransportierte Filmbahn 25 wieder auf die Filmrolle 15 aufwickelt.

Wird bei der Überprüfung des Vakuums festgestellt, daß der volle Vakuum-Nennwert erreicht ist, beginnt die Bildung einer Filmschlaufe 86 in der Filmbahn 25, indem der Filmtransport-Motor 23 erneut gestartet und ein weiteres Stück der Filmbahn 25 aus der Rollfilm-Kassette 3 transportiert wird. Da der Anfang der Filmbahn 25 durch das Vakuum und durch die Andruckrolle 62 auf der in der Aufspann-Startposition arretierten Aufzeichnungstrommel 9 festgehalten wird, staut sich die Filmbahn 25 und bildet die Filmschlaufe 86. Die Länge der während der Schlaufenbildung durch die Filmlängen-Meßvorrichtung 32 transportierten Filmbahn 25 wird gemessen, und wenn die gemessene Länge mit der zuvor in die Steuer-Schaltung eingegebene Länge L₄ der Filmschlaufe 86 übereinstimmt, wird der Filmtransport-Motor 23 wieder gestoppt. Zu diesem Zeitpunkt hat die Filmlängen-Meßvorrichtung 32 eine Filmlänge L₃ + L₄ gemessen.

Nach der Bildung der Filmschlaufe 86 wird das Nebenluft-Ventil 43 durch das Steuersignal S₅ auf der Leitung 46 geöffnet und auch das Vakuum auf einen reduzierten Wert abgesenkt. Auch das reduzierte Vakuum wird mit dem Vakuummesser 42 gemessen und mit einem reduzierten Soll-Nennwert verglichen. Sollte sich herausstellen, daß das reduzierte Vakuum nicht erreicht wurde, wird der bisherige Ablauf, wie bereits beschrieben, ebenfalls rückgängig gemacht und die Filmbahn 25 zurück in die Rollfilm-Kassette 3 transportiert.

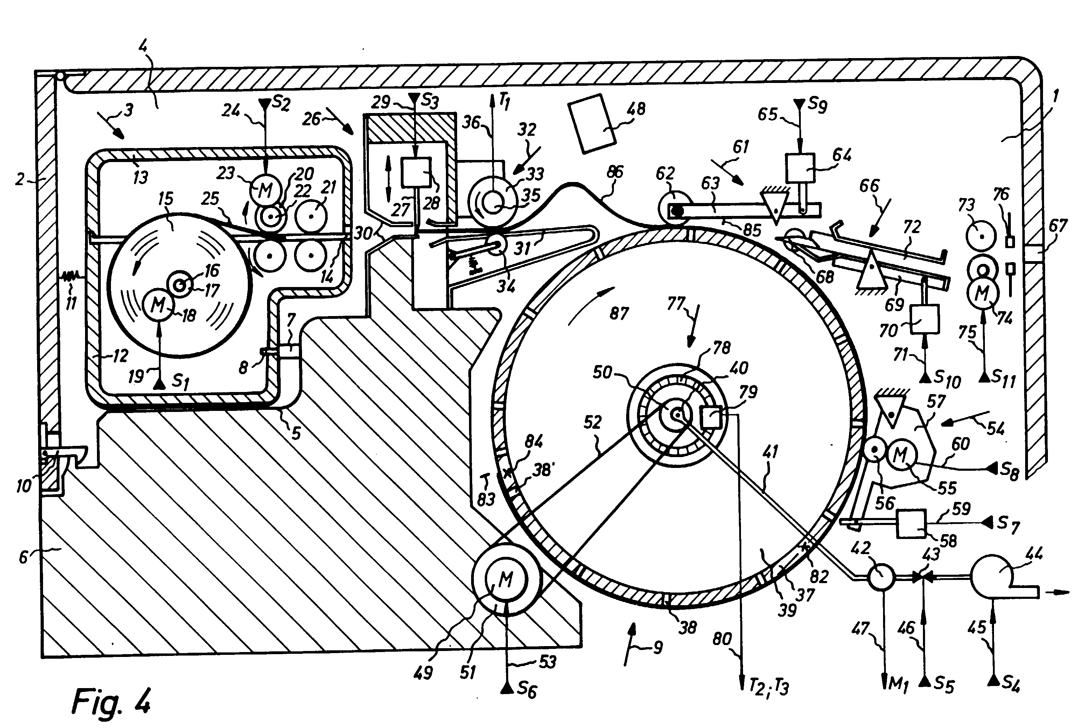

Wird der reduzierte Soll-Nennwert für das Vakuum erreicht, beginnt das Aufspannen der Filmbahn 25 bzw. der Filmfahne 25' nach dem Schneidevorgang auf die Aufzeichnungstrommel 9, was in Fig. 4 dargestellt ist.

Durch das Steuersignal S₈ auf der Leitung 60 wird der Hilfs-Motor 55 des Positionier-Antriebes 54 und durch das Steuersignal S₂ auf der Leitung 24 der Filmtransport-Motor 23 gestartet. Durch Drehen der Aufzeichnungstrommel 9 in Richtung eines Pfeiles 87 legt sich die Filmbahn 25 um die Aufzeichnungstrommel 9, wobei der der jeweiligen Umschlingung entsprechende Teil der Filmbahn 25 durch die Saugloch-Reihen auf der Trommeloberfläche fixiert wird. Die Drehgeschwindigkeit der Aufzeichnungstrommel 9 und die Transportgeschwindigkeit der Filmbahn 25 sind so aufeinander abgestimmt, daß die Größe der Filmschlaufe 86 beim Aufspannen annähernd erhalten bleibt.

Beim Aufspannen schiebt der Filmtransport-Motor 23 die Filmbahn 25 so lange nach, bis die Filmlängen-Meßvorrichtung 32 eine insgesamt durchlaufene Filmlänge festgestellt hat, die der zuvor eingegebenen Länge L₁ der aufzuspannenden Filmfahne minus dem konstanten Abstand L₄ zwischen Schneide- und Meßpunkt entspricht. Zu diesem Zeitpunkt liegt das Ende der von der Filmbahn 25 abzuschneidenden Filmfahne 25' im Schneidepunkt unter dem Schneidemesser 27 der Film-Schneidevorrichtung 26. Der Filmtransport-Motor 23 und der Hilfs-Motor 55 des Positionier-Antriebes 54 werden gestoppt und die Filmfahne 25' durch den Steuerbefehl S₃ auf der Leitung 29 durch das Schneidemesser 27 von der Filmbahn 25 abgetrennt.

Fig. 4 zeigt die Betriebsweise der Vorrichtung beim Aufspannvorgang nach Abschneiden der Filmfahne 25' von der Filmbahn 25.

Nach dem Filmschnitt läuft der Filmtransport-Motor 23 mit umgekehrter Drehrichtung an und transportiert die Filmbahn 25 wieder in die Rollfilm-Kassette 3 zurück, bis die Schnittkante zwischen dem Filmtransport-Rollenpaar 22 liegt, womit die Filmbahn 25 für einen weiteren Aufspannvorgang vorbereitet ist.

Nach dem Filmschnitt läuft auch der Hilfs-Motor 55 des Positionier-Antriebs 54 wieder an, und die Aufzeichnungstrommel 9 dreht sich zum Aufspannen der gesamten Filmfahne 25' weiter in Richtung des Pfeiles 87, wobei die aufgespannte Filmfahne 25' durch das reduzierte Vakuum auf die Trommeloberfläche fixiert wird.

Durch die Filmschlaufe 86 wird eine Entkopplung des Filmtransports von der Drehbewegung der Aufzeichnungstrommel 9 erreicht, wodurch in vorteilhafter Weise Taumelfehler der Rollfilm-Kassette, schiefes Aufspannen der Filmfahne '25 auf der Aufzeichnungstrommel 9 sowie Verzug und Faltenbildung innerhalb der Filmfahne '25 vermieden werden. Hinzu kommt, daß durch die Filmschlaufe 86 der Anfangsbereich der Filmfahne 25' versteift wird, so daß eine sichere Fixierung des Anfangsbereiches gewährleistet ist. Durch die Absenkung des Vakuums während des Aufspannens wird die Neigung der Filmfahne zu Faltenbildung und Schiefzug weiter gemindert und eine spannungsfreie Aufspannung gewährleistet.

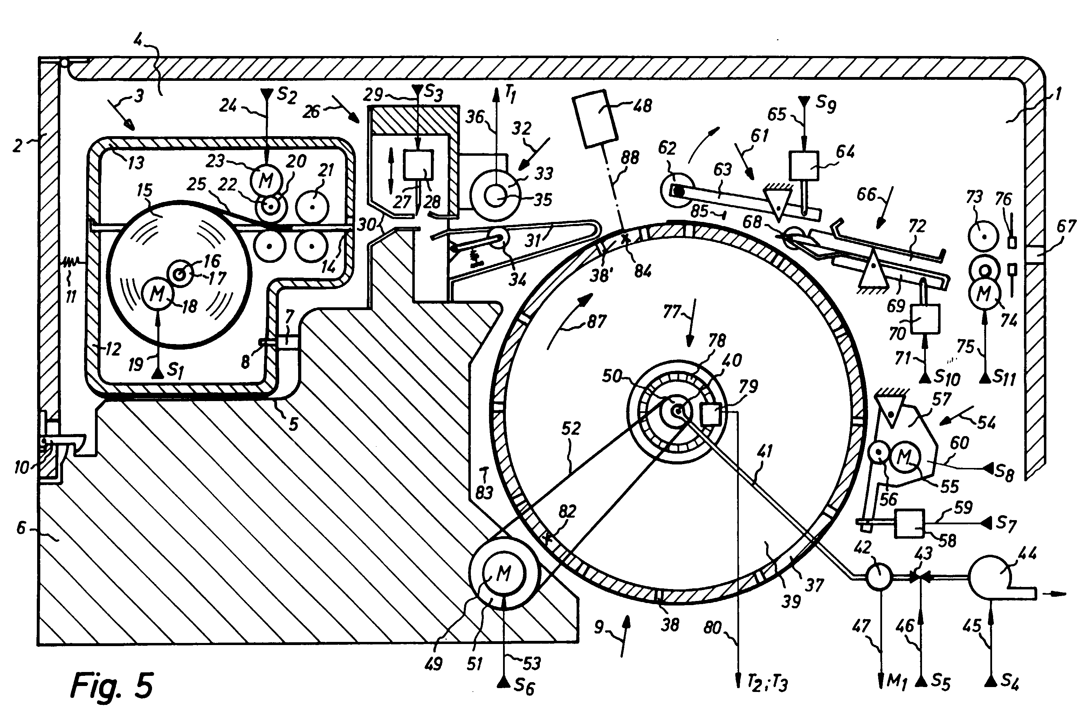

Fig. 5 zeigt die Betriebsweise der Vorrichtung beim Aufspannvorgang während des Fixierens der abgeschnittenen Filmfahne 25' auf der Aufzeichnungstrommel 9.

Wenn sich die Aufzeichnungstrommel 9 in der Belichtungs-Startposition befindet, wird der Hilfs-Motor 55 des Positionier-Antriebs 54 gestoppt. In der Belichtungs-Startposition befindet sich die Aufspann-Marke 84 an der Aufzeichnungstrommel 9 in der optischen Achse 88 des Aufzeichnungsorgans 48. In der Belichtungs-Startposition der Aufzeichnungstrommel 9 wird das Reibrad 56 des Positionier-Antriebs 54 und die Andruckrolle 62 der Andruck-Vorrichtung 61 durch die Steuersignale S₈ und S₉ auf den Leitungen 60 und 65 von der Oberfläche der Aufzeichnungstrommel 9 abgehoben. Gleichzeitig wird das Vakuum durch Schließen des Nebenluft-Ventils 43 mit dem Steuer signal S₅ auf der Leitung 46 auf den vollen Nennwert angehoben. Ergibt die Vakuum-Überwachung mit dem Vakuummesser 42, daß der Nennwert auch tatsächlich erreicht ist, startet der Haupt-Motor 49 durch das Steuersignal S₆ auf der Leitung 53 und dreht die Aufzeichnungstrommel 9 während der Belichtung der aufgespannten Filmfahne 25' durch das Aufzeichnungsorgan 48.

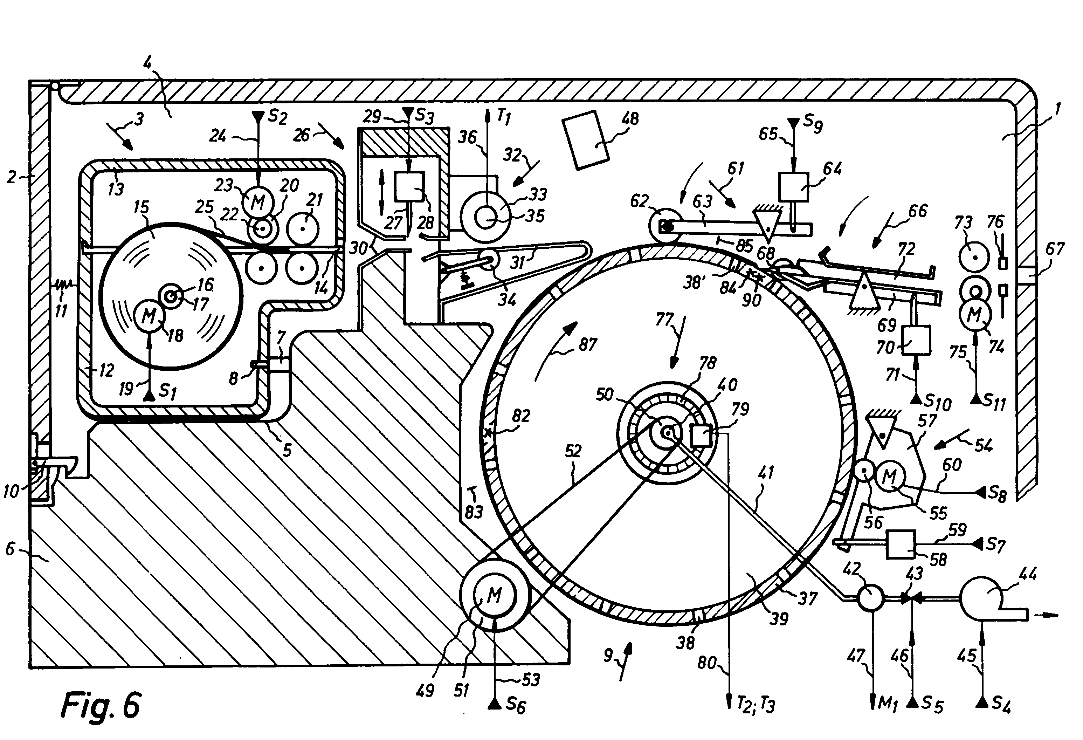

Fig. 6 zeigt die Betriebsweise der Vorrichtung zu Beginn des Abspannvorganges, bei dem sich die Aufsichtstrommel 9 in einer Abspann-Startposition befindet.

Nach der Belichtung der Filmfahne 25' und Abbremsung der Aufzeichnungstrommel 9 wird der Abspann-Vorgang eingeleitet.Das Reibrad 56 des Positionier-Antriebes 54 wird durch den Steuerbefehl S₇ auf der Leitung 59 wieder auf die Oberfläche der Aufzeichnungs-trommel 9 abgesenkt, der Hilfs-Motor 55 des Positionier-Antriebes 54 wird durch das Stuersignal S₈ auf der Leitung 60 eingeschaltet und die Aufzeichnungstrommel 9 in Richtung des Pfeiles 87 in die Abspann-Startposition gedreht. In der Abspann-Startposition befindet sich eine feste Abspann-Marke 90 an der Aufzeichnungstrommel 9 unter der Spitze des Abhebefingers 68 der Abhebe-Vorrichtung 66. Die Abspann-Marke 90 liegt in dem Bereich der Trommeloberfläche, der nicht von der aufgespannten Filmfahne 25' bedeckt sein darf, damit der Abhebefinger 68 mit Sicherheit zwischen Anfang und Ende der aufgespannten Filmfahne 25' in die nicht dargestellte Umfangsnut der Aufzeichnungstrommel 9 eintauchen kann. Daraus ergibt sich die Forderung, daß die maximal mögliche Länge einer aufzuspannenden Filmfahne 25' um den genannten Bereich kürzer als die Umfangslänge der Aufzeichnungsrommel 9 sein muß. Die Abspann-Startposition wird unabhängig von der jeweiligen Länge der aufgespannten Filmfahne 25' eingenommen.

In der Abspann-Startposition wird die Andruckrolle 62 der Andruck-Vorrichtung 61 durch das Steuersignal S₉ auf die Leitung 65 und der Abhebefinger 68 der Abhebe-Vorrichtung 71 abgesenkt sowie der Transport-Motor 74 durch das Steuersignal S₁₁ auf der Leitung 75 gestartet und dadurch das Filmtransport-Rollenpaar 73 in Rotation versetzt. Danach wird der Hilfs-Motor 55 des Positionier-Antriebes 54 erneut durch das Steuersignal S₈ auf der Leitung 60 gestartet und die Aufzeichnungstrommel 9 weiter in Richtung des Pfeiles 87 gedreht.

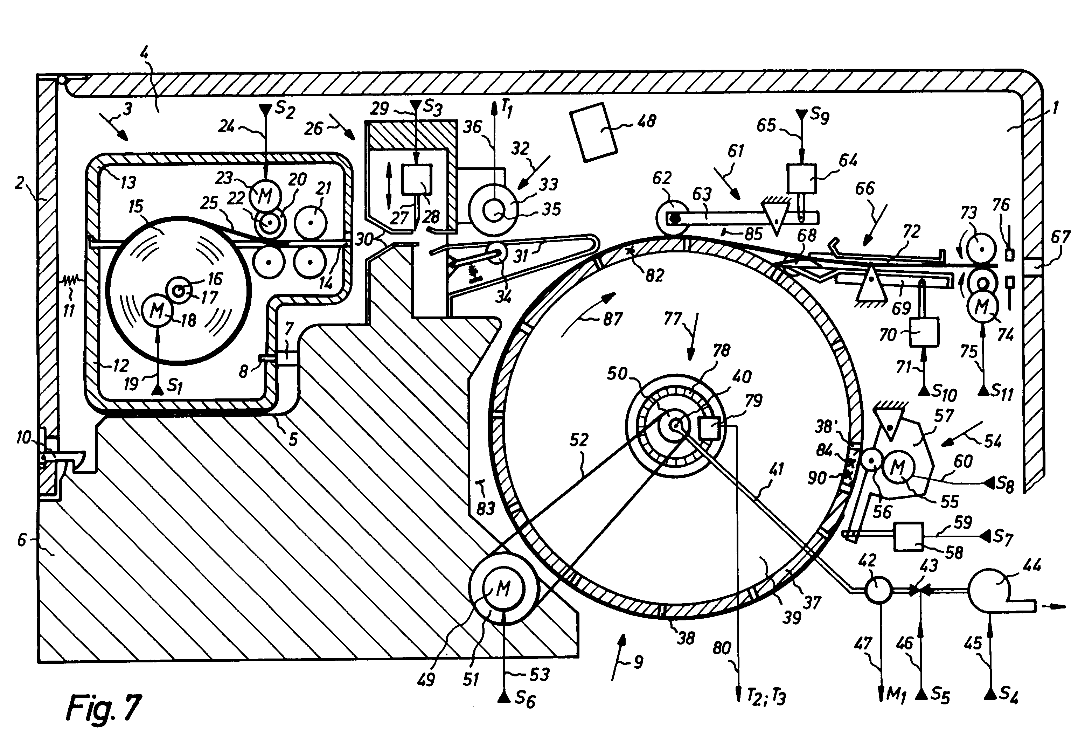

Fig. 7 zeigt die Betriebsweise der Vorrichtung beim Abspannvorgang während des Abschälens der belichteten Filmfahne 25' von der Aufzeichnungstrommel 9.

Durch die Drehung der Aufzeichnungstrommel 9 schält der Abhebefinger 68 die belichtete Filmfahne 25' von der Trommeloberfläche unter vollem Vakuum ab. Durch die Drehung der Aufzeichnungstrommel 9 wird die belichtete Filmfahne 25' durch den Leitkanal 72 der Abhebe-Vorrichtung 66 geschoben, bis sie von dem Transport-Rollenpaar 73 erfaßt und durch die Filmaustritts-Öffnung 67 aus der Dunkelkammer 1 heraustransportiert wird.

Der Transport-Motor 74 ist mit einem Freilauf ausgestattet, durch den in vorteilhafter Weise eine Geschwindigkeitsanpassung zwischen der Drehbewegung der Aufzeichnungstrommel 9 und der Drehbewegung des Filmtransport-Rollenpaares 73 vorgenommen wird.

Nachdem die Vorrichtung zum Auf- und Abspannen von Filmmaterial und deren Betriebsweise beschrieben sind, wird der Aufbau der Aufzeichnungstrommel 9 und des Vakuum-Verteilers sowie dessen Betriebsweise näher erläutert.

Fig. 8 zeigt den prinzipiellen Aufbau der Aufzeichnungstrommel 9 mit Vakuum-Verteiler zur Vakuum-Steuerung im Querschnitt. Die Wandung 93 der als Hohlzylinder 37 ausgebildeten Aufzeichnungstrommel 9 ist mit den Sauglöchern 38 versehen, welche in axial zur Trommelachse verlaufenden Reihen 38' angedreht sind. Die Sauglöcher 38 der einzelnen Saugloch-Reihen 38' münden in Saugkanälen 94, die in der Wandung 93 axial zur Trommelachse verlaufen.

Die Aufzeichnungstrommel 9 weist einen Vakuum-Verteiler auf, der beim Abspannen der Filmfahne 25' die einzelnen Saugloch-Reihen 38' in Abhängigkeit von dem jeweiligen Drehwinkel der Aufzeichnungstrommel 9 bzw. von der momentanen Umschlingung der Filmfahne 25' um die Aufzeichnungstrommel 9 nacheinander mit Vakuum beaufschlagt und der jeweils nur so viele Saugloch-Reihen 38' zuschaltet, wie auf der momentanen Umfangslänge der aufzuspannenden Filmfahne 25' entfallen.

Durch das schrittweise Zuschalten der Saugloch-Reihen 38' entsprechend der jeweiligen Umschlingung der Filmfahnen 25' wird in vorteilhafter Weise ein genaues und faltenfreies Aufspannen insbesondere großformatiger Filmfahnen und aufgrund der geringen Vakuumverluste eine sichere Fixierung der Filmfahnen 25' auf der Trommeloberfläche während der Belichtung erreicht.

Der Vakuum-Verteiler besteht im wesentlichen aus einer Vakuum-Klammer 95, Verteilerleitungen 96, Ventilen 97 und aus einer Steuerscheibe 98 für die Ventile 97.

Die zylinderförmige Vakuum-Kammer 95, die sich im Trommel-Innenraum befindet, ist über die radial zur Trommelachse verlaufenden Verteilerleitungen 96 an die einzelnen Saugkanäle 94 bzw. Saugloch-Reihen 38' angeschlossen. In den Verteilerleitungen 96 sind kreisförmig um die Trommelachse die Ventile 97 angeordnet, welche die einzelnen Saugkanäle 94 selektiv mit der Vakuum-Kammer 95 verbinden oder von ihr abtrennen. Die Vakuum-Kammer 95 steht über eine Saugbohrung 99 im Wellenzapfen 100 mit der nicht dargestellten Vakuum-Pumpe 44 in Verbindung.

Im dargestellten Ausführungsbeispiel sind die Ventile 97 durch die Steuerscheibe 98 mechanisch steuerbar. Alternativ dazu können beispielsweise auch pneumatische oder elektrisch steuerbare Ventile Verwendung finden.

Die Steuerscheibe 98, die an ihrem Umfang einen Steuerfinger 101 und eine Nut 102 aufweist, ist auf dem Wellenzapfen 100 mit einer Gleitpassung gelagert. In die Nut 102 der Steuerscheibe 98 läßt sich mittels eines ortsfesten Stellorgans 103 ein Arretierstift 104 einführen, der die Steuerscheibe 98 in einer bestimmten Stellung blockiert. Durch Drehen der Aufzeichnungstrommel 9 bewegen sich dann die Ventile 97 an dem Steuerfinger 101 der blockierten Steuerscheibe 98 vorbei, der die Ventile 97 nacheinander in Abhängigkeit von der Drehrichtung der Aufzeichnungstrommel 9 öffnet oder schließt, wobei die Ventile 97 in der jeweils eingenommenen Arbeitsstellung verharren.

Die jeweilige Arbeitsstellung der Ventile 97 ist durch Striche 105 angedeutet, wobei ein in Richtung einer Verteilerleitung 96 verlaufender Strich 105 ein geöffnetes Ventil 97 und ein senkrecht zu einer Verteilerleiltung 96 verlaufender Strich 105 ein geschlossenes Ventil 97 andeutet. Die Gleitpassung, mit der die Steuerscheibe 98 auf dem Wellenzapfen 100 gelagert ist, ist so beschaffen, daß der Wellenzapfen 100 einerseits bei blockierter Steuerscheibe 98 ohne nennenswerte Reibung rotiert und andererseits die Steuerscheibe 98 ohne Schlupf in der bei Freigabe durch den Arretierstift 104 eingenommenen relativen Position zur Aufzeichnungstrommel 9 mitnimmt, wobei bei Fortsetzung der Trommeldrehung keine weiteren Ventile 97 betätigt werden.

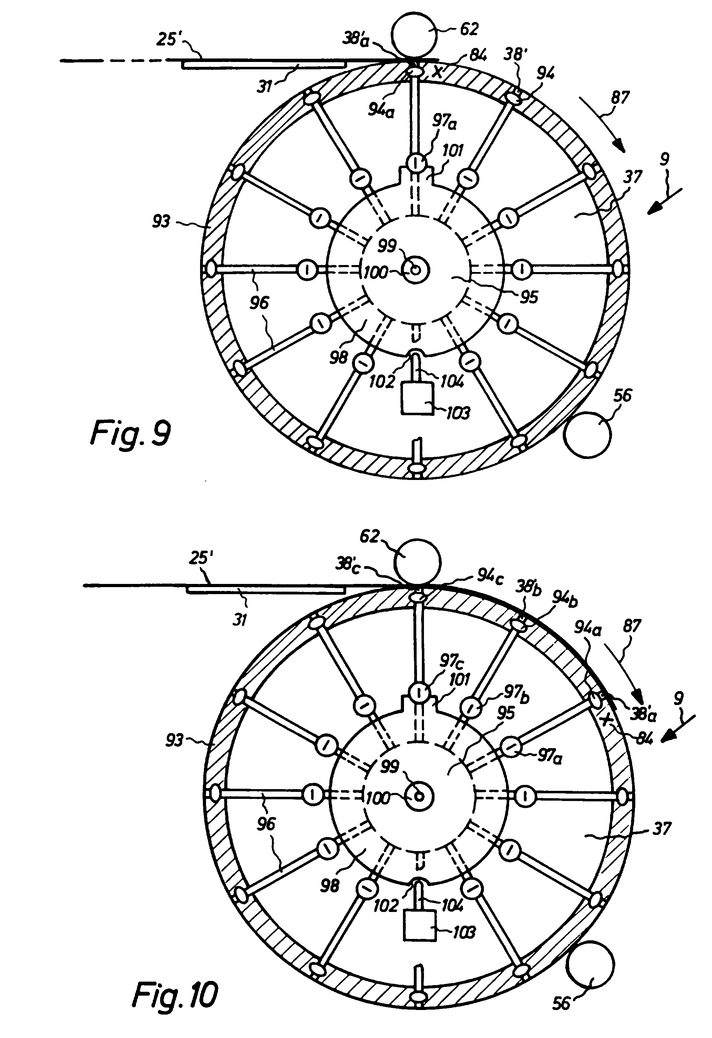

Die Betriebsweise des Vakuum-Verteilers sollen anhand der Fig. 9 bis 14 näher erläutert werden.

Fig. 9 zeigt den Beginn des Aufspannvorganges für eine Filmfahne 25', bei dem sich die im Schnittbild dargestellte Aufzeichnungstrommel 9 in einer Aufspann-Startposition befindet.

In der Aufspann-Startposition der Aufzeichnungstrommel 9 liegt die Aufspannmarke 84 im Bereich der Andruckrolle 62, in dem der Anfang der zur Aufzeichnungstrommel 9 transportierten Filmfahne 25' mit der Trommeloberfläche in Berührung kommt.

Die Aufzeichnungstrommel 9 wurde durch das Reibrad 56 des an die Trommeloberfläche angeschwenkten Positionier-Antriebs 57 in die Aufspann-Startposition gedreht, in der die Aufzeichnungstrommel 9 zunächst durch Abschalten des Positionier-Antriebes 57 verharrt.

Die Steuerscheibe 98 wird durch den Arretierstift 104 in derjenigen Position zur Aufspann-Startposition der Aufzeichnungstrommel 9 blockiert, in der der Steuerfinger 101 das Ventil 97a öffnet. Dadurch wird nur der im Bereich der Aufspannmarke 84 liegende Saugkanal 94a beim Anschalten der Vakuum-Pumpe 44 mit Vakuum beauftragt und der Anfangsbereich der aufzuspannenden Filmfahne 25' durch die zugehörige Saugloch-Reihe 38'a auf der Trommeloberfläche fixiert.

Da zu diesem Zeitpunkt nur die zum Saugkanal 94a gehörende Saugloch-Reihe 38'a mit Vakuum beaufschlagt ist, wird das Vakuum dort mit seinem vollen Nennwert wirksam, wodurch in vorteilhafter Weise ein Verrutschen des Anfangsbereiches der Filmfahne 25' aus seiner exakten Position in der Anfangsphase der Filmaufspannung vermieden wird.

Nach der Fixierung des Anfangsbereiches der Filmfahne 25' auf der Saugloch-Reihe 38'a wird der Positionier-Antrieb 57 erneut eingeschaltet und die Aufzeichnungstrommel 9 aus der Aufspann-Startposition in Richtung des Pfeiles 87 gedreht, wodurch die Filmfahne 25' von der Film-Transportfläche 31 gezogen und mit wachsender Umschlingung um die sich drehende Aufzeichnungstrommel 9 gelegt wird.

Fig. 10 zeigt den Aufspannvorgang in einem fortgeschrittenen Zustand, in dem durch Drehen der Aufzeichnungstrommel 9 in Richtung des Pfeiles 87 nacheinander auch die Ventile 97b und 97c an dem Steuerfinger 101 der blockierten Steuerscheibe 98 vorbeibewegt und damit geöffnet wurden, so daß entsprechend der momentanen Umschlingung der Filmfahne 25' um die Aufzeichnungstrommel 9 jetzt zusätzlich die zu den Saugkanälen 94b und 94c gehörenden Saugloch-Reihen 38'b und 38'c mit Vakuum beaufschlagt sind.

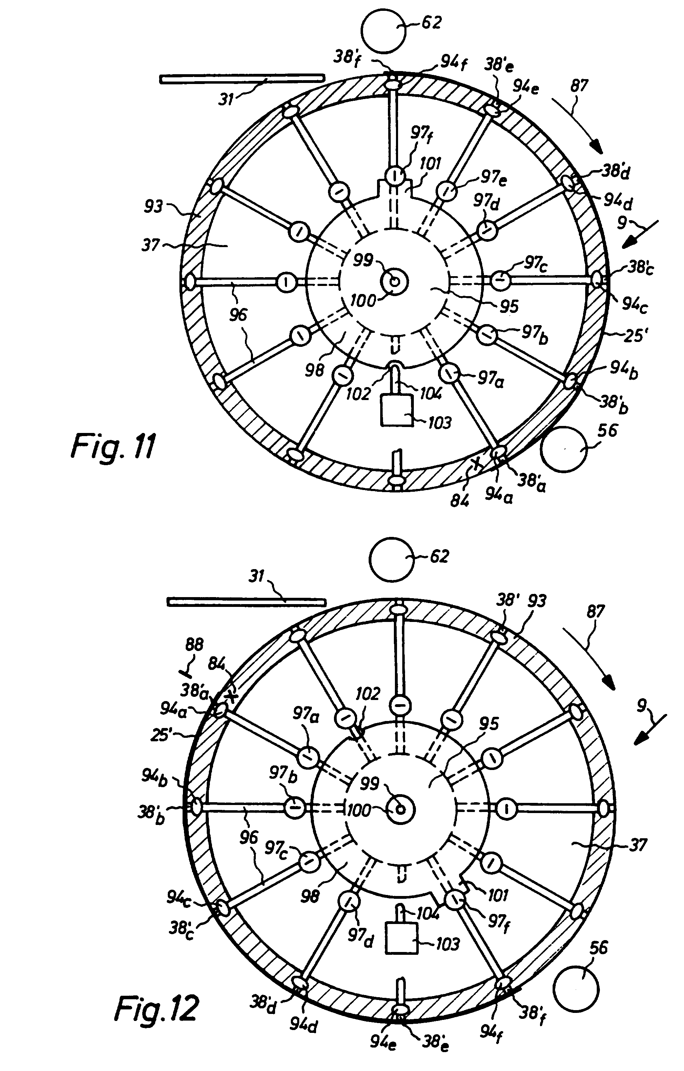

Fig. 11 zeigt den Aufspannvorgang zu dem Zeitpunkt, zu dem die Filmfahne 25 durch Drehen der Aufzeichnungstrommel 9 in Richtung des Pfeiles 87 und durch schrittweise Zuschaltung der zu den Saugkanälen 94b bis 94f gehörigen Saugloch-Reihen 38'b und 38'c bereits ganz aufgespannt ist.

Durch die schrittweise Zuschaltung der Saugloch-Reihen 38' wird das Aufspannverhalten wesentlich verbessert. Da der volle Vakuumwert nur an der jeweils zugeschalteten Saugloch-Reihe 38' wirksam ist, an der sich Filmfahne 25' und Trommeloberfläche momentan berühren, und das freie Ende der Filmfahne 25' noch nicht angesaugt wird, kann es sich beim Aufspannen frei zentrieren, wodurch in vorteilhafter Weise ein genaues und faltenfreies Aufspannen insbesondere langer Filmfahnen gewährleistet ist. Das Aufspannverhalten kann noch weiter verbessert werden, indem während des Aufspannvorganges der Vakuumnennwert durch Einschalten des Nebenluft-Ventils 43 abgesenkt wird.

Nachdem die Filmfahne 25' vollständig aufgespannt ist, wird die Andruckrolle 62 von der Trommeloberfläche abgehoben und der Arretierstift 104 durch das Stellorgan 103 aus der Nut 102 der Steuerscheibe 98 herausgezogen, wodurch die Blockierung der Steuerscheibe 98 aufgehoben wird. Bei Weiterdrehen der Aufzeichnungstrommel 9 dreht sich die Steuerscheibe 98 jetzt mit der Aufzeichnungstrommel 9 mit, und zwar in der bei Freigabe der Steuerscheibe 98 eingenommenen relativen Position zur Aufzeichnungstrommel 9. Dadurch findet keine Relativbewegung mehr zwischen den Ventilen 97 und dem Steuerfinger 101 der Steuerscheibe 98 statt, es werden keine weiteren Ventile 97 geöffnet und keine weiteren Saugloch-Reihen 38' zugeschaltet.

Es werden somit jeweils nur so viele Saugloch-Reihen 38' mit Vakuum beaufschlagt, wie umfangsmäßig von der momentan aufgespannten Filmfahne 25' auch tatsächlich bedeckt werden, wobei die übrigen Saugloch-Reihen 38' abgeschaltet sind. Dadurch ist aufgrund der geringen Vakuumverluste stets eine sichere Fixierung der Filmfahnen 25' unterschiedlicher Formate auf der Aufzeichnungstrommel 9, insbesondere in der Belichtungs-Phase, in der sich die Aufzeichnungstrommel 9 mit hoher Geschwindigkeit dreht, gewährleistet.

Das Schaltersignal für das Stellorgan 103, mit dem die Blockierung der Steuerscheibe 98 bei vollständiger Aufspannung der Filmfahnen 25' unterschiedlicher Formate aufgehoben wird, kann automatisch erzeugt werden.

Für diesen Fall ist beispielsweise ein Taktgeber mit der Aufzeichnungstrommel 9 gekoppelt, der bei Drehung der Aufzeichnungstrommel 9 eine Taktfolge erzeugt. Die von der Aufspann-Startpositon der Aufzeichnungstrommel 9 an gezählten Takte sind ein Maß für den momentanen Drehwinkel der Aufzeichnungstrommel 9 und damit für die momentan aufgespannte Länge der Filmfahne 25'. Die jeweilige Formatlänge der aufzuspannenen Filmfahne 25' wird als Anzahl von Takten vorgegeben. Die gezählten Takte des Taktgebers werden dann laufend mit der vorgegebenen Anzahl von Takten verglichen und bei Taktgleichheit das Schaltsignal für das Stellorgan 103 erzeugt.

Fig. 12 zeigt die Aufzeichnungstrommel 9 zu dem Zeitpunkt, zu dem sie sich mittels des Positionier-Antriebs 57 bereits in die Belichtungs-Startposition gedreht hat und der Positionier-Antrieb 57 abgeschaltet ist. In der Belichtungs-Startposition ist die Anfangsmarke 84 auf der Aufzeichnungstrommel mit der optischen Achse 88 des Aufzeichnungsorgans 48 in Deckung.

Aus der Figur ist ersichtlich, daß durch das Drehen der Aufzeichnungstrommel 9 in die Belichtungs-Startposition keine weiteren Saugloch-Reihen 38' zugeschaltet wurden, da der Steuerfinger 101 der Steuerscheibe 98 am Ventil 97f verbleibt.

Nach der Belichtung erfolgt der Abspannvorgang der belichteten Filmfahne 25' von der Aufzeichnungstrommel 9.

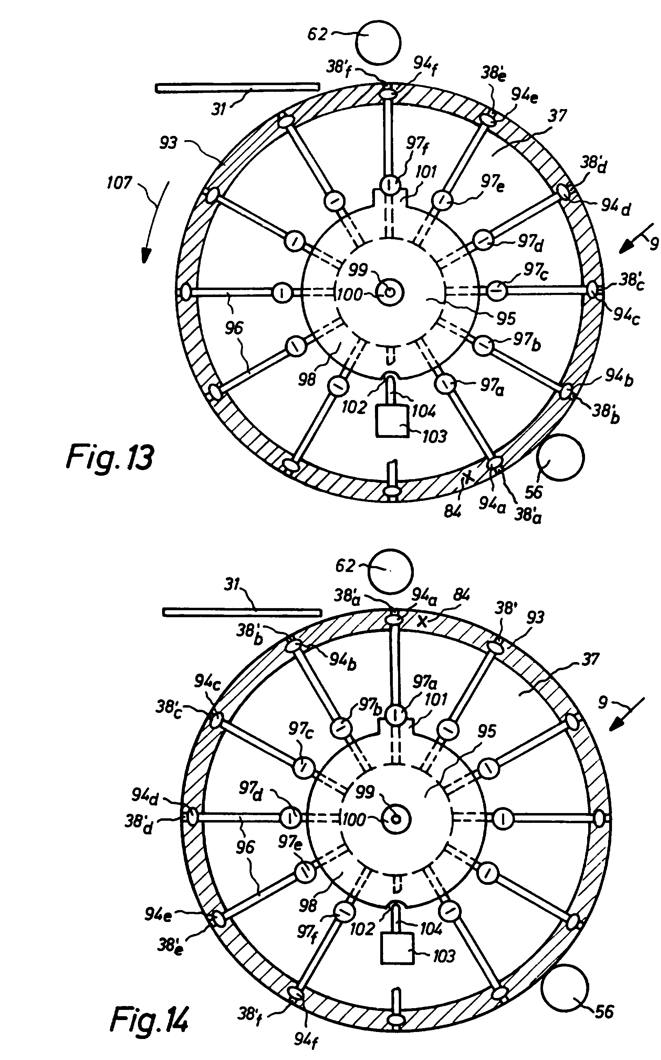

Fig. 13 zeigt die Aufzeichnungstrommel 9 nach dem Abspannen der belichteten Filmfahne 25'. Die beim Abspannen zuvor geöffneten Ventile 97a bis 97f sind zu diesem Zeitpunkt noch geöffnet und müssen zur Vorbereitung eines neuen Aufspannvorganges geschlossen werden.

Dazu wird der Positionier-Antrieb 57 wieder an die Aufzeichnungstrommel 9 angeschwenkt und gestartet. Die Aufzeichnungstrommel 9 dreht sich zusammen mit der Steuerscheibe 98 in Richtung eines Pfeiles 107 in umgekehrter Richtung wie beim Aufspannvorgang. Durch ein Schaltsignal an das Stellorgan 103 wird der Arretierstift 104 zur Steuerscheibe 98 bewegt. Der Arretierstift 104 gleitet zunächst auf dem Rand der rotierenden Steuerscheibe 98, bis er in die Nut 102 fällt und die Steuerscheibe 98 blockiert.

Durch fortgesetztes Drehen der Aufzeichnungstrommel 9 in Richtung des Pfeiles 107 bewegen sich dann die Ventile 97f bis 97a nacheinander an dem Steuerfinger 101 der blockierten Steuerscheibe 98 vorbei und werden durch den Steuerfinger 101 geschlossen. Dieser Zustand ist in Fig. 14 dargestellt.

Falls das Abspannen der belichteten Filmfahnen unter schrittweiser Vakuum-Abschaltung der einzelnen Saugloch-Reihen erfolgen soll, dreht sich die Aufzeichnungstrommel 9 in Richtung des Pfeiles 87.

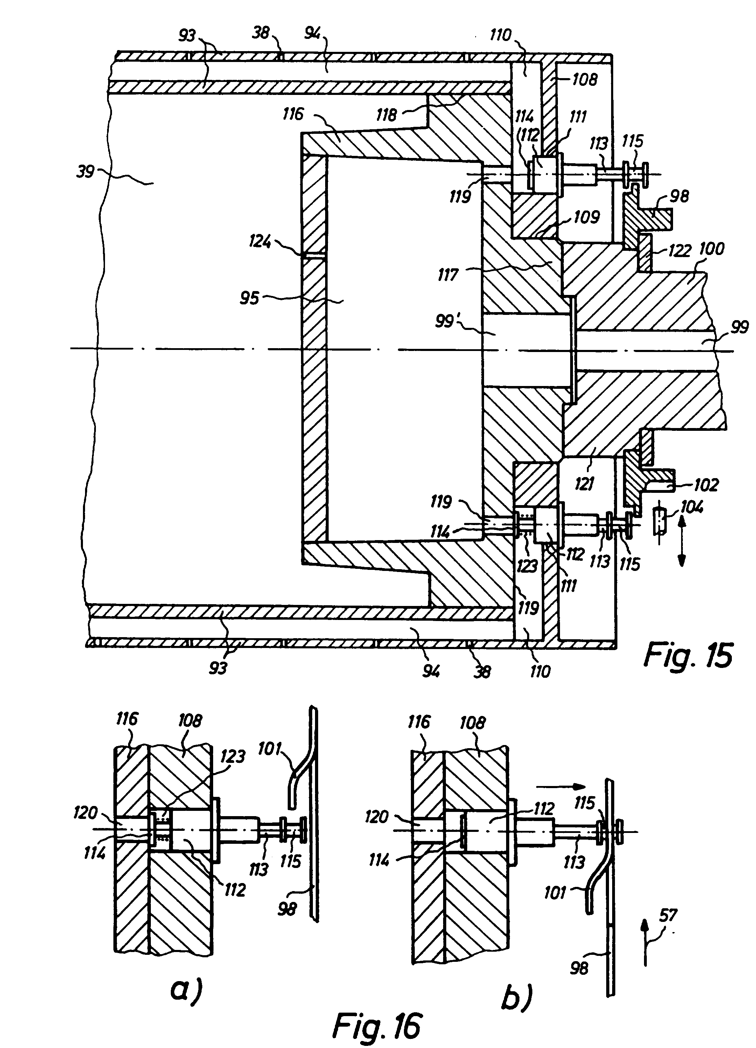

Fig. 15 zeigt ein praktisches Ausführungsbeispiel für den Vakuum-Verteiler in einem Längsschnitt durch die als Hohlzylinder ausgebildete Aufzeichnungstrommel 9.

In der Wandung 93 des Hohlzylinders 39 sind zwei der Saugkanäle 94 sichtbar, die mit den Sauglöchern 38 verbunden sind. Die Stirnfläche des Hohlzylinders 39 ist durch einen Deckel 108 verschlossen, der eine zentrische Öffnung 100 aufweist. Die Innenseite des Deckels 108 ist mit radial verlaufenden Nuten 110 versehen, welche mit den Saugkanälen 94 in Verbindung stehen. Die Außenseite des Deckels 108 weist Bohrungen 111 auf, die kreisförmig um die Trommelachse angeordnet sind und in den radial verlaufenden Nuten 110 münden. Die Bohrungen 111 nehmen die Grundkörper 112 der Ventile 97 auf. In dem Grundkörper 112 eines Ventils 97 ist ein Stößel 113 bewegbar, der an einem Ende eine kreisförmige Dichtungsfläche 114 und an seinem anderen Ende eine Steuerrolle 115 trägt.

Im Hohlzylinder 39 befindet sich ein zylindrisches Gehäuseteil 116, dessen Ansatz 117 in die Öffnung 109 des Deckels 108 eingepaßt ist. Die Umfangsfläche 118 des Gehäuseteils 116 ist mit der Innenfläche des Hohlzylinders 39 und die Stirnseite 119 des Gehäuseteils 116 mit der Innenfläche des Deckels 108 luftdicht verbunden. Die durch die Stirnseite 119 des Gehäuseteils 116 luftdicht abgedeckten Nuten 110 in dem Deckel 108 bilden die Verteilerleitungen 96. An dem Ansatz 117 des Gehäuseteils 116 ist der Wellenzapfen 100 befestigt. Der Innenraum des Gehäuseteils 116 bildet die Vakuum-Kammer 95, die über die Saugbohrung 99 im Gehäuseteil 116 an die Saugbohrung 99 im Wellenzapfen 100 angeschlossen ist. Das Gehäuseteil 116 weist an seiner Stirnseite 119 kreisförmig um die Trommelachse angeordnete Bohrungen 120 auf, die den Ventilen 47 gegenüberliegen und durch die Dichtungsflächen 114 der Ventile 97 verschließbar sind.

Auf dem Ansatz 121 des Wellenzapfens 100 ist die Steuerscheibe 98 mittels einer Scheibe 122 in einer Gleitpassung gelagert. An der Steuerscheibe 98 ist die Nut 102 sichtbar, in die der Arretierstift 104 eingeführt werden kann.

In der Fig. 15 ist das obere Ventil 97 durch den Steuerfinger 101 der Steuerscheibe 98 geöffnet, indem die Dichtungsfläche 114 die zugehörige Bohrung 120 freigibt, wodurch über die Bohrung 120 und die Verteilerleitung 96 eine Verbindung zwischen der Vakuum-Kammer 95 und dem oberen Saugkanal 94 hergestellt ist. Das untere Ventil 97 ist dagegen geschlossen, indem die Dichtungsfläche 114 des Ventils 97 mittels einer Feder 123 gegen die zugehörige Bohrung 120 gedrückt wird, wodurch die Verbindung zwischen Vakuum-Kammer 95 und unterem Saugkanal 94 unterbrochen ist. Durch die Feder 123 hat das Ventil 97 eine stabile Arbeitsstellung im geschlossenem Zustand. Die Steuerung der Ventile 97 durch die Steuerscheibe 98 wird anhand der Fig. 16 noch näher erläutert.

Das Gehäuseteil 116 kann zusätzlich eine Drosselbohrung 124 aufweisen, welche die Vakuum-Kammer 95 mit dem Trommelinnenraum verbindet. Durch die Drosselbohrung 124 baut sich beim Evakuieren der Vakuum-Kammer 95 auch im Trommelinnenraum allmählich ein Vakuum auf, das als Vakuumspeicher dient. Der Vakuumspeicher bewirkt, daß sich das Vakuum an den Sauglöchern 38 beim Abschalten der Vakuum-Pumpe nur langsam abbaut.

Fig. 16 verdeutlicht die Steuerung der Ventile 97 durch die Steuerscheibe 98. Der bisher nur schematisch angedeutete Steuerfinger 101 der Steuerscheibe 98 ist als "Weiche" für die Steuerrolle 115 des Ventils 97 ausgebildet.

In Fig. 16a hat die Steuerrolle 115 des Ventils 97 noch nicht den Steuerfinger 101 der Steuerscheibe 98 erreicht. Das Ventil 97 verharrt in der stabilen Arbeitsstellung "geschlossen", in der die Dichtungsfläche 114 die Bohrung 120 abdichtet.

In Fig. 16b wurde die Steuerrolle 115 des Ventils 97 durch eine Bewegung des Ventils 97 in Richtung eines Pfeiles 125 von dem Steuerfinger 101 der Steuerscheibe 98 erfaßt und auf die Steuerscheibe 98 geleitet, wodurch der Stößel 113 des Ventils 97 eine Hubbewegung ausführt. Durch diese Hubbewegung des Stößels 113 nimmt das Ventil 97 jetzt die Arbeitsstellung "geöffnet" ein, in der die Dichtungsfläche 114 die Bohrung 120 freigibt.

Dadurch, daß die Steuerrolle 115 jetzt auf der Steuerscheibe 98 abrollt, wird das Ventil 97 in Arbeitsstellung "geöffnet" fixiert. Durch eine Relativbewegung in entgegengesetzter Richtung kann die Steuerrolle 115 des Ventils 97 über den Steuerfinger 101 in die stabile Arbeitsstellung "geschlossen" geführt werden.

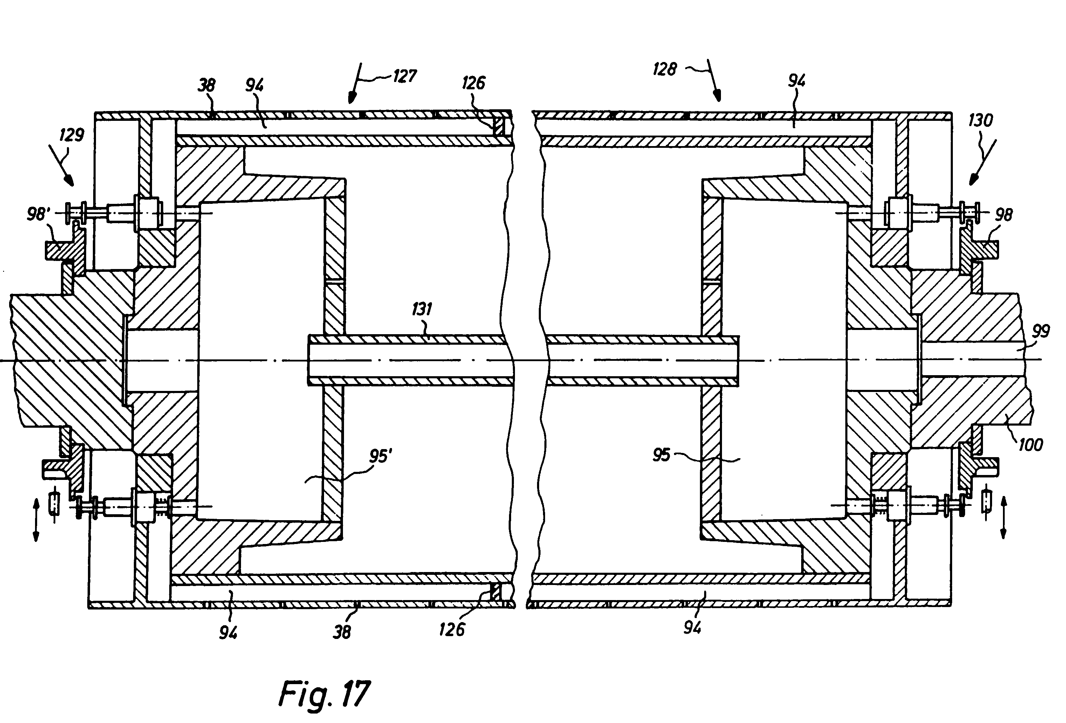

Fig. 17 zeigt ein weiteres Ausführungsbeispiel für die Aufspann-Vorrichtung, in dem die Aufzeichnungstrommel 1 durch Schotte 126 in den Saugkanälen 94 in zwei axial nebeneinanderliegende Vakuumbereiche 127 und 128 unterteilt ist, die getrennt mit Vakuum beaufschlagbar sind.

Beide Vakuumbereiche 127 und 128 sind durch getrennte Vakuum-Verteiler 129 und 130 steuerbar. Die Vakuum-Kammer 95 des Vakuum-Verteilers 130 ist, wie in Fig. 17 dargestellt und beschrieben, über die Saugbohrung 99 im Wellenzapfen 100 mit der Vakuum-Pumpe 44 verbunden. Dagegen wird die Vakuum-Kammer 95' des Vakuum-Verteilers 129 über eine Rohrleitung 131 von der Vakuum-Kammer 95 des Vakuum-Verteilers 130 mit Vakuum versorgt.

Beide Vakuumbereiche 127 und 128 sind durch die Steuerscheiben 98 und 98' getrennt steuerbar, wodurch die Vakuumverluste auch bei unterschiedlichen Formatbreiten der aufzuspannenden Filmfahnen in vorteilhafter Weise geringgehalten werden können.

Wenn eine Filmfahne mit einer geringeren Formatbreite als die Breite eines Vakuumbereiches aufzuspannen ist, wird nur ein Vakuumbereich aktiviert. Der andere Vakuumbereich bleibt dann abgeschaltet, indem die Steuerscheibe des betreffenden Vakuumbereiches bei dem Aufspannvorgang nicht blockiert wird, wodurch keine Ventile geöffnet werden.

Wenn zwei Filmfahnen geringer Formatbreite aber gleicher Formatlänge oder eine Filmfahne aufzuspannen ist, deren Formatbreite größer als die Breite eines Vakuumbereiches ist, werden beide Vakuumbereiche aktiviert und die automatische Zuschaltung der Saugloch-Reihen synchron gesteuert.

Falls zwei Filmfahnen geringer Formatbreite aber mit unterschiedlichen Formatlängen aufzuspannen sind, kann die Zuschaltung der Saugloch-Reihen entsprechend der jeweiligen Formatlänge in den beiden Vakuumbereichen in vorteilhafter Weise getrennt gesteuert werden.

## Patentansprüche

1. Vorrichtung zum automatischen Aufspannen von Filmmaterial auf die Aufzeichnungstrommel eines Reproduktionsgerätes und zum Aufspannen des durch das Aufzeichnungsorgan belichteten Filmmaterials von der Aufzeichnungstrommel, bei der die Aufzeichnungstrommel (9) in einem lichtdichten Raum (1) des Reproduktionsgerätes angeordnet ist, die Mantelfläche der Aufzeichnungstrommel (9) zur Vakuum-Fixierung des Filmmaterials (25') Sauglöcher (38') aufweist, die in axial zur Trommelachse verlaufenden Saugloch-Reihen (38') angeordnet sind und bei der die Saugloch-Reihen (38') an eine ortsfeste Vakuum-Pumpe (44) anschließbar sind, gekennzeichnet durch
- eine das Filmmaterial als drehbare Filmrolle (15) enthaltende und mit einer schlitzförmigen, lichtdicht schließenden Filmdurchtritts-Öffnung (14) versehene Rollfilm-Kassette (3), welche in den lichtdichten Raum (1) des Reproduktionsgerätes einbringbar und dort arretierbar ist, wobei die Filmdurchtritts-Öffnung (14) zur Aufzeichnungstrommel (9) weist und axial zu dieser verläuft,
- eine zwischen der Filmdurchtritts-Öffnung (14) der Rollfilm-Kassette (3) und der Aufzeichnungstrommel (9) angeordnete Transport- und Leitfläche (30; 31), welche im Bereich der Aufzeichnungstrommel (9) im wesentlichen tangential zu dieser verläuft, für die von der Filmrolle (15) abgewickelte Filmbahn (25),
- Film-Transportmittel (22; 23) zum Transport der Filmbahn (25) aus der Rollfilm-Kassette (3) und zur Aufzeichnungstrommel (9),
- eine zwischen der Rollfilm-Kassette (3) und der Aufzeichnungstrommel (9) angeordnete Film-Schneidevorrichtung (26) zum Abtrennen eines jeweils zu belichtenden Filmblattes (25') vorgegebener Länge von der Filmbahn (25),
- eine zwischen der Rollfilm-Kassette (3) und der Aufzeichnungstrommel (9) angeordnete Filmlängen-Meßvorrichtung (32) zur Feststellung der jeweils durchlaufenen Länge der Filmbahn (25),
- eine Andruck-Vorrichtung (61) mit Andruckrolle (62), die in demjenigen Bereich an die Aufzeichnungstrommel (9) anschwenkbar ist, in dem der Anfang der über die Transport- und Leitfläche (30; 31) zur Aufzeichnungstrommel (9) transportierten Filmbahn (25) mit der Trommeloberfläche in Berührung kommt,
- einen Positionier-Antrieb (54) zum Drehen der Aufzeichnungstrommel (9) in eine Aufspann-, Belichtungs- und Abspann-Startposition,
- eine Abhebe-Vorrichtung (66) mit einem an die Aufzeichnungstrommel (9) schwenkbaren Abhebefinger (68) zum Abschälen des jeweils belichteten Filmblattes (25') von der Aufzeichnungstrommel (9),
- axial zur Trommelachse verlaufende Saugkanäle (94) in der Aufzeichnungstrommel (9), von denen jeder die Sauglöcher (38) einer Saugloch-Reihe (38') miteinander verbindet, und
- einen durch die Drehbewegung der Aufzeichnungstrommel (9) steuerbaren Vakuum-Verteiler (95; 96; 97; 98), welcher die einzelnen Saugkanäle (94) über eine Saugleitung (41) mit der ortsfesten Vakuum-Pumpe (44) verbindet, wobei der Vakuumverteiler (95; 96; 97; 98) derart steuerbar ist, daß beim Aufspannvorgang zunächst diejenige Saugloch-Reihe (38') mit Vakuum beaufschlagt wird, auf der der Anfangsbereich des Filmblattes (25') liegt, dann nacheinander weitere Saugloch-Reihen (38') entsprechend der wachsenden Umschlingung der sich drehenden Aufzeichnungstrommel (9) mit dem Filmblatt (25') zugeschaltet und mit Vakuum beaufschlagt werden, und die Zuschaltung weiterer Saugloch-Reihen (38') entsprechend der jeweiligen Umfangslänge des aufzuspannenden Filmblattes (25') an derjenigen Saugloch-Reihe (38') beendet wird, auf der der Endbereich des Filmblattes (25') liegt.

2. Vorrichtung nach Anspruch 1, dadurch gekennzeichnet, daß in die Saugleitung (41) ein steuerbares Neben luft-Ventil (43) eingeschaltet ist zur Reduzierung des Vakuums während des Auf- und/oder Abspannens des Filmmaterial.

3. Vorrichtung nach Anspruch 1 oder 2, dadurch gekennzeichnet, daß die Rollfilm-Kassette (3) zur Lichtabdichtung im Bereich der Filmdurchtritts-Öffnung (14) oberhalb und unterhalb der Filmbahn (25) angeordnete Dichtungsrollen (21) aufweist, deren Länge mindestens der Länge der Filmdurchtritts-Öffnung (14) entspricht.

4. Vorrichtung nach einem der Ansprüche 1 bis 3, dadurch gekenneichnet, daß
- die Film-Transportmittel (22; 23) aus in der Rollfilm-Kassette (3) oberhalb und unterhalb der Filmbahn (25) angeordneten Transportrollen (22) bestehen, von denen mindestens eine durch einen Filmtransport-Motor (23) antreibbar ist,
- der Filmtransport-Motor (22) ortsfest am Geräteträger (6) des Reproduktionsgerätes befestigt ist, und
- die angetriebene Transportrolle (22) durch die Wandung der Rollfilm-Kassette (3) mit dem Filmtransport-Motor (23) verbindbar ist.

5. Vorrichtung nach einem der Ansprüche 1 bis 4, dadurch gekennzeichnet, daß die Welle (16) der Filmrolle (15) in der Rollfilm-Kassette (3) mit einem Wickel-Motor (18) koppelbar ist, um die abgewickelte Filmbahn (25) gegebenenfalls wieder in die Rollfilm-Kassette (3) zurückzutransportieren und auf die Filmrolle (15) aufzuwickeln.

6. Vorrichtung nach einem der Ansprüche 1 bis 5, dadurch gekennzeichnet, daß durch ständige Erregung des Wickel-Motors (18) ein Gegendrehmoment zu dem Drehmoment des Filmtransport-Motors (23) erzeugbar ist, um die Filmbahn (25) zwischen Filmrolle (15) und Transportrollen (22) zu spannen.

7. Vorrichtung nach einem der Ansprüche 1 bis 6, dadurch gekennzeichnet, daß
- die Rollfilm-Kassette (3) aus einem Unterteil (12) und einem abnehmbaren lichtdicht schließenden Deckel (13) besteht, und
- jeweils eine Rolle des Dichtungs-Rollenpaares (21) und des Transport-Rollenpaares (22) im Unterteil (12) der Rollfilm-Kassette (3) und die andere Rolle im Deckel (13) gelagert ist.

8. Vorrichtung nach einem der Ansprüche 1 bis 7, dadurch gekennzeichnet, daß
- der lichtdichte Raum (1) des Reproduktionsgerätes eine lichtdicht schliessende und verriegelbare Ladeklappe (2) zum Einbringen der Rollfilm-Kassette (3) aufweist,
- der Geräteträger (6) innerhalb des lichtdichten Raumes (1) eine Ladebühne (5) zum Absetzen der Rollfilm-Kassette (3) aufweist, und
- Mittel (7; 8; 11) zum Ausrichten der Rollfilm-Kassette (3) bezüglich der Aufzeichnungstrommel (9) und zum Arretieren der Rollfilm-Kassette (9) am Geräteträger (6) vorhanden sind.

9. Vorrichtung nach einem der Ansprüche 1 bis 8, dadurch gekennzeichnet, daß die Film-Schneidevorrichtung (26) für die Filmbahn (25) als Kreismesser ausgebildet ist, das rotierend entlang der Schnittlinie quer zur Filmbahn (25) bewegbar ist.

10. Vorrichtung nach einem der Ansprüche 1 bis 9, dadurch gekennzeichnet, daß die Filmlängen-Meßvorrichtung (32) aus einem durch die Bewegung der Filmbahn (25) angetriebenen Meßrad (33), einem die Filmbahn (25) an das Meßrad federnd andrückenden Stützrad (34) und aus einem mit dem Meßrad (33) gekoppelten Drehimpulsgeber (3 5) besteht, welcher die Rotation des Meßrades (33) in eine Taktfolge umsetzt, wobei die Anzahl der Takte ein Maß für die gemessene Filmlänge ist.

11. Vorrichtung nach einem der Ansprüche 1 bis 10, dadurch gekennzeichnet, daß
- der lichtdichte Raum (1) im Bereich der Abhebe-Vorrichtung (66) eine schlitzförmige Filmaustritts-Öffnung (67) für die belichteten Filmblätter (25') aufweist,
- die Abhebe-Vorrichtung (66) mit einem Film-Leitkanal (72) versehen ist, der bei an die Aufzeichnungstrommel (9) angeschwenktem Abhebefinger (68) in Richtung der Filmaustritts-Öffnung (67) weist, und
- zwischen der Abhebe-Vorrichtung (66) und der Filmaustritts-Öffnung (67) ein weiteres antreibbares Filmtransport-Rollenpaar (73) vorgesehen ist, um die belichteten Filmblätter (25') aus dem lichtdichten Raum (1) durch die Filmaustritts-Öffnung (67) zu transportieren.

12. Vorrichtung nach einem der Ansprüche 1 bis 11, dadurch gekennzeichnet, daß an die Filmaustritts-Öffnung (67) des lichtdichten Raumes (1) eine Nehmer-Filmkassette zur Aufnahme der belichteten Filmblätter (25') lichtdicht anschließbar ist.

13. Vorrichtung nach einem der Ansprüche 1 bis 12, dadurch gekennzeichnet, daß an die Filmaustritts-Öffnung (67) des lichtdichten Raumes (1) der Filmtransport-Kanal einer Film-Entwicklungsstation lichtdicht anschließbar ist.

14. Vorrichtung nach einem der Ansprüche 1 bis 13, dadurch gekennzeichnet, daß in die Saugleitung (41) im Vakuum-Meter (42) eingeschaltet ist, das ein elektrisches Meßsignal zur Vakuum-Überwachung erzeugt.

15. Vorrichtung nach einem der Ansprüche 1 bis 14, dadurch gekennzeichnet, daß der Vakuum-Verteiler (95; 96; 97; 98) folgende Komponenten aufweist:
- eine Vakuumkammer (95) in der Aufzeichnungstrommel (9), welche über einen der Wellenzapfen (100), der Aufzeichnungstrommel (9) mit der ortsfesten Vakuum-Pumpe (94) in Verbindung steht,
- im wesentlichen radial zur Trommelachse verlaufende Verteilerleitungen (96) zwischen der Vakuumkammer (45) und den einzelnen Saugkanälen (94),
- steuerbare Ventile (97) in den Verteilerleitungen (96) zum selektiven Öffnen und Schließen der Verteilerleitungen (96), und
- Mittel (98; 101; 102; 103; 104) zur Steuerung der Ventile (97) in Abhängigkeit von der Drehbewegung der Aufzeichnungstrommel (9).

16. Vorrichtung nach Anspruch 15, dadurch gekennzeichnet, daß die Mittel (98; 101; 102; 103; 104) zur Steuerung der Ventile (97)aus folgenden Komponenten bestehen :
- einer auf dem Wellenzapfen (100) der Aufzeichnungstrommel (9) gelagerten Steuerscheibe (98) mit einem Steuerfinger (101) als Betätigungsglied zum Öffnen und Schließen der kreisförmig um die Steuerscheibe (98) angeordneten Ventile (97),
- einer Arretiervorrichtung (102; 103; 104) zum Blockieren der Steuerscheibe (98) in einer vorgegebenen ortsfesten Position zur Aufzeichnungstrommel (9), wobei die Steuerscheibe (98) auf dem Wellenzapfen (100) derart durch eine Gleitpassung gelagert ist, daß die durch die Arretiervorrichtung (102; 103; 104) nicht blockierte Steuerscheibe (98) von dem Wellenzapfen (100) der sich drehenden Aufzeichnungstrommel (9) ohne Schlupf mitgenommen wird.

17. Vorrichtung nach Anspruch 16, dadurch gekennzeichnet, daß die Arretiervorrichtung (102; 103; 104) aus einem durch ein ortsfestes Stellorgan (103) verstellbaren Arretierstift (104) besteht, der in eine an der Steuerscheibe (98) befindliche Nut (102) eingreift.

18. Vorrichtung nach einem der Ansprüche 15 bis 17, dadurch gekennzeichnet, daß
- die Ventile (97) jeweils durch Betätigen einer an einem Stößel (113) befestigten Steuerrolle (115) durch den Steuerfinger (101) der Steuerscheibe (98) in die Arbeitsstellung "geöffnet" steuerbar sind, wobei die Ventile (97) ohne Betätigung der Steuerrollen (115) durch den Steuerfinger (101) ihre stabile Arbeitsstellung "geschlossen" einnehmen.

19. Vorrichtung nach einem der Ansprüche 1 bis 18, dadurch gekennzeichnet, daß
- die Aufzeichnungstrommel (9) als Hohlzylinder (37) ausgebildet ist, in dessen Wandung (93) die Saugkanäle (94) verlaufen und dessen Stirnseiten durch scheibenförmige Deckel (108) verschlossen sind, von denen mindestens einer eine zentrale Öffnung (108) hat,
- die in das Trommelinnere weisende Innenfläche des Deckels (108) im wesentlichen radial verlaufende Nuten (110) aufweist,
- die Außenfläche des Deckels (108) mit kreisförmig um die Trommelachse angeordneten Bohrungen (111) versehen ist, die in den Nuten (110) münden, und in denen die Ventile (97) angebracht sind,
- ein zylinderförmiges Gehäuseteil (110) an der Innenfläche des Deckels (108) und mit seinem Ansatz (117) in der zentralen Öffnung (109) des Deckels (108) befestigt ist, wobei die durch das Gehäuseteil (116) luftdicht abgedeckten Nuten (110) im Deckel (108) die mit den Saugkanälen (44) verbundenen Verteilerleitungen (96) bilden,
- an dem durch die Öffnung (109) des Deckels (108) ragenden Ansatz (117) des Gehäuseteils (116) der Wellenzapfen (100) befestigt ist, der die Saugbohrung (99') aufweist,
- der Innenraum des Gehäuseteils (116) die Vakuumkammer (95) bildet, die über die Saugbohrung (99') im Gehäuseteil (116) mit der Saugbohrung (99) im Wellenzapfen (100) in Verbindung steht,
- die zum Deckel (108) gerichtete Stirnfläche des Gehäuseteils (116) kreisförmig angeordnete Bohrungen (110) aufweist, welche die Vakuum-Kammer (95) mit den Nuten (110) verbinden und welche so angeordnet sind, daß sie durch die Ventile (97) verschließbar sind, und
- die Steuerscheibe (98) mittels einer Scheibe (122) an dem Ansatz (121) des Wellenzapfens (100) gelagert ist.

20. Vorrichtung nach einem der Ansprüche 1 bis 19, dadurch gekennzeichnet, daß
- die Saugkanäle (94) in der Aufzeichnungstrommel (9) Trennwände (126) aufweisen, wodurch die Aufzeichnungstrommel (9) in zwei getrennte Vakuum-Bereiche (127; 128) unterteilt ist, und
- jedem Vakuum-Bereich (127; 128) ein separat steuerbarer Vakuum-Verteiler (128; 130) zugeordnet ist.

21. Vorrichtung nach Anspruch 20, dadurch gekennzeichnet, daß die Vakuum-Kammer (95') des einen Vakuum-Verteilers (129) über ein im Trommelinnenraum axial verlaufendes Rohr (131) mit der Vakuumkammer (95) des anderen Vakuum-Verteilers (130) verbunden ist.

22. Betriebsweise einer Vorrichtung zum automatischen Aufspannen von Filmmaterial auf eine in einem lichtdichten Raum angeordnete Aufzeichnungstrommel eines Reproduktionsgerätes und zum Abspannen des durch ein Aufzeichnungsorgan belichteten Filmmaterials von der Aufzeichnungstrommel, die in der Mantelfläche axial zur Trommelachse verlaufende und über eine Saugleitung an eine ortsfeste Vakuum-Pumpe anschließbare Saugloch-Reihen aufweist, bei der
- die Aufzeichnungstrommel (9) mittels eines Positionier-Antriebes (54) in eine Aufspann-Startposition gedreht wird, Filmtransport-Mittel (22; 23) gestartet werden und die Filmbahn (25) von einer Filmrolle (15) einer Rollfilm-Kassette (3) abgewickelt und über eineTransport- und Leitfläche (30;31) zur Aufzeichnungstrommel (9) transportiert wird,
- die Filmtransport-Mittel (22; 23) gestoppt werden, wenn der Anfang der transportierten Filmbahn (25) in der Aufspann-Startposition im Bereich einer Andruckrolle (62) einer Andruck-Vorrichtung (61) und im Bereich einer Saugloch-Reihe (38') der Aufzeichnungstrommel (9) liegt,
- die Andruckrolle (62) der Andruck-Vorrichtung (61) zum Andrücken des Anfangsbereichs der Filmbahn (25) auf die Aufzeichnungstommel (9) abgesenkt wird,
- die erste Saugloch-Reihe (38') durch einen Vakuum-Verteiler (95; 96; 97; 98)mit Vakuum beaufschlagt und der Anfangsbereich der Filmbahn (25) angesaugt wird,
- die Filmtransport-Mittel (22; 23) und der Positionier-Antrieb (54) zum Drehen der Aufzeichnungstrommel (9) gestartet werden und weitere Filmbahn (25) zur Aufzeichnungstrommel (9) transportiert wird,
- während der Trommeldrehung nacheinander weitere Saugloch-Reihen (38') entsprechend der wachsenden Umschlingung zwischen Aufzeichnungstrommel (9) und Filmbahn (25) durch den Vakuum-Verteiler (95; 96; 97; 98) zugeschaltet und zur Fixierung der Filmbahn (25) mit Vakuum beaufschlagt werden,
- beim Aufspannen der Filmbahn (25) die Filmbahnlänge in einer Filmlängen-Meßvorrichtung (32) gemessen wird und die Filmtransport-Mittel (22; 23) sowie der Positionier-Antrieb (54) gestoppt werden, wenn das Ende des von der Filmbahn (25) abzuschneidenden Filmblattes (25') vorgegebener Länge unter einer Film-Schneidevorrichtung (26) liegt,
- das Filmblatt (25') durch die Film-Schneidevorrichtung (26) von der Filmbahn (25) abgeschnitten wird, der restliche Teil des Filmblattes (25') mittels des Positionier-Antriebes (54) bei schrittweiser Zuschaltung weiterer Saugloch-Reihen (38') durch den Vakuum-Verteiler (95; 96; 97; 98) aufgespannt wird,
- die Zuschaltung weiterer Saugloch-Reihen (38') durch den Vakuum-Verteiler (95; 96; 97; 98) entsprechend der jeweiligen Umfangslänge des Filmblattes (25') an derjenigen Saugloch-Reihe (38') beendet wird, auf der der Endbereich des Filmblattes (25') liegt, und dann die Andruckrolle (62) der Andruck-Vorrichtung (61) von der Aufzeichnungstrommel (9) abgehoben wird,
- das aufgespannte Filmblatt (25') durch das Aufzeichnungsorgan (48) punkt- und zeilenweise belichtet wird,
- nach der Belichtung die Aufzeichnungstrommel (9) durch den Posiionier-Antrieb (54) in eine Abspann-Startposition gedreht wird, in der Abspann-Startposition die Andruckrolle (62) der Andruck-Vorrichtung (61) und ein Abhebefinger (68) einer Abhebe-Vorrichtung (66) auf die Aufzeichnungstrommel (9) abgesenkt werden,
- das belichtete Filmblatt (25') durch Drehen der Aufzeichnungstrommel (9) mittels des abgesenkten Abhebefingers (68) von der Trommeloberfläche abgeschält wird und
- die beim Aufspannen des Filmblattes (25') mit Vakuum beaufschlagten Saugloch-Reihen (38') durch den Vakuum-Verteiler (95; 96; 97 ;98) wieder abgeschaltet und die Aufzeichnungstrommel (9) in die Aufspann-Startposition gedreht wird.

23. Betriebsweise der Vorrichtung nach Anspruch 22, dadurch gekennzeichnet, daß
- nach dem Fixieren des Anfangs der Filmbahn (25) auf der Aufzeichnungstrommel (9) nur die Filmtransport-Mittel (22; 23) gestartet werden und durch Nachschieben zusätzlicher Filmbahn (25) aus der Rollfilm-Kassette (3) im Anfangsbereich der Filmbahn (25) eine Filmschlaufe vorgegebener Länge gebildet wird, und
- nach Bildung der Filmschlaufe (86) der Positionier-Antrieb (54) zur Drehung der Aufzeichnungstrommel (9) gestartet und weitere Filmbahn (25) unter Beibehaltung der gebildeten Filmschlaufe (86) zur Aufzeichnungstrommel (9) transportiert und aufgespannt wird.

24. Betriebsweise der Vorrichtung nach Anspruch 22 oder 23, dadurch gekennzeichnet, daß der für die Belichtungs-Phase vorgesehene Nennwert des Vakuums durch Öffnen des Nebenluft-Ventils (43) für die Dauer der Aufspann-Phase abgesenkt wird, wodurch das Filmblatt (25) mit vermindertem Unterdruck angesaugt wird.

25. Betriebsweise der Vorrichtung nach einem der Ansprüche 22 bis 24, dadurch gekennzeichnet, daß der IST-Wert und der reduzierte IST-Wert für das Vakuum mittels des Vakuummessers (42) gemessen werden, die gemessenen IST-Werte mit Nennwerten verglichen werden, und falls die gemessenen IST-Werte die Nennwerte nicht erreichen, die bisher durchgeführten Vorgänge rückgängig gemacht werden und die Filmbahn (25) wieder in die Rollfilm-Kassette (3) zurücktransportiert wird.

26. Betriebsweise der Vorrichtung nach einem der Ansprüche 22 bis 25, dadurch gekennzeichnet,daß die Länge der Filmbahn (25), welche die Filmlängen-Meßvorrichtung (32) durchläuft, gemessen und die gemessene Filmlänge mit dem konstanten Abstand zwischen Filmlängen-Meßvorrichtung (32) und der Aufspann-Marke (84) in der Aufspann-Startposition der Aufzeichnungstrommel (9) laufend verglichen wird, und daß die Filmtransport-Mittel (22; 23) bei Gleichheit gestoppt werden, wobei sich der Anfang der Filmbahn (25) auf der Aufspann-Marke (84) befindet.

27. Betriebsweise der Vorrichtung nach einem der Ansprüche 22 bis 26, dadurch gekennzeichnet, daß die Länge der zusätzlich transportierten Filmbahn (25) in der Filmlängen-Meßvorrichtung (32) gemessen und die gemessene Filmlänge mit einer vorgegebenen Länge für die Filmschlaufe (86) verglichen wird, und daß bei Gleichheit die Filmtransport-Mittel (22; 23) gestoppt werden.

28. Betriebsweise der Vorrichtung nach einem der Ansprüche 22 bis 27, dadurch gekennzeichnet, daß beim Aufspannen der Filmbahn (25) die Messung der Filmbahnlänge in der Filmlängen-Meßvorrichtung (32), ausgehend von der bisher gemessenen Filmlänge, fortgesetzt und die momentan gemessene Filmlänge mit der vorgegebenen Länge für das jeweils aufzuspannende Filmblatt (25') unter Berücksichtigung des konstanten Abstandes zwischen der Filmlängen-Meßvorrichtung (32) und der Film-Schneidevorrichtung (26) verglichen wird, und daß bei Gleichheit die Filmtransport-Mittel (22; 23) und der Positionier-Antrieb (54) gestoppt werden, wobei das Ende des von der Filmbahn (25) abzuschneidenden Filmblattes (25') unter der Film-Schneidevorrichtung (26) liegt.

## Claims

1. A device for the automatic clamping of film material onto the recording drum of a reproduction apparatus and for the clamping of the film material, exposed by the recording element, from the recording drum, in which the recording drum (9) is arranged in a light-tight chamber (1) of the reproduction apparatus, the surface of the recording drum (9) has suction holes (38') for the vacuum-fixing of the film material (25'), which are arranged in suction hole rows (38') running axially to the drum axis and in which the suction hole rows (38') are connectable to a fixed vacuum pump (44), characterised by
- a roll film cassette (3) containing the film material as a rotatable film roll (15) and provided with a slit-shaped film passage opening (14) closing in a light-tight manner, which roll film cassette (3) is able to be introduced into the light-tight chamber (1) of the reproduction apparatus and is able to be arrested there, in which the film passage opening (14) points towards the recording drum (9) and runs axially thereto,
- a transporting and guiding surface (30;31) arranged between the film passage opening (14) of the roll film cassette (3) and the recording drum (9), which transporting and guiding surface (30;31) runs in the region of the recording drum (9) substantially tangentially to the latter, for the film strip (25) which is unwound from the film roll (15),
- film-transporting means (22;23) to transport the film strip (25) from the roll film cassette (3) and to the recording drum (9),
- a film-cutting device (26) arranged between the roll film cassette (3) and the recording drum (9) for the separating from the film strip (25) of a film sheet (25') of given length which in each case is to be exposed,
- a film length measuring device (32) arranged between the roll film cassette (3) and the recording drum (9) to establish the length of the film strip (25) running through in each case,
- a proofing device (61) with proof roller (62), which is able to be swivelled against the recording drum (9) in the region in which the start of the film strip (25), which is transported via the transporting and guiding surface (30;31) to the recording drum (9) comes into contact with the drum surface,
- a positioning drive (54) for the rotating of the recording drum (9) into a clamping, exposure and release start position,
- a lifting device (66) with a lifting finger (68) which is able to be swivelled against the recording drum (9) to peel off the respectively exposed film sheet (25') from the recording drum (9),
- suction ducts (94) in the recording drum (9) running axially to the drum axis, each of which connects the suction holes (38) of one suction hole row (38') with each other, and
- a vacuum distributor (95;96;97;98) controllable by the rotational movement of the recording drum (9), which distributor connects the individual suction ducts (94) via a suction line (41) with the fixed vacuum pump (44), in which the vacuum distributor (95;96;97;98) is controllable such that in the clamping process firstly the suction hole row (38') on which the start region of the film sheet (25') lies is acted upon by vacuum, then in succession further suction hole rows (38') are connected in in accordance with the increasing looping of the rotating recording drum (9) with the film sheet (25') and are acted upon by vacuum, and the connecting in of further suction hole rows (38') is terminated according to the respective circumferential length of the film sheet (25') which is to be clamped at the suction hole row (38') on which the end region of the film sheet (25') lies.

2. A device according to Claim 1, characterised in that a controllable auxiliary air valve (43) is connected into the suction line (41) to reduce the vacuum during the clamping and/or releasing of the film material.

3. A device according to Claim 1 or 2, characterised in that the roll film cassette (3) has sealing rollers (21) arranged above and below the film strip (25) to seal off light in the region of the film passage opening (14), the length of which sealing rollers (21) corresponds at least to the length of the film passage opening (14).

4. A device according to one of Claims 1 to 3, characterised in that
- the film transporting means (22;23) consist of transporting rollers (22) arranged in the roll film cassette (3) above and below the film strip (25), at least one of which transporting rollers (22) is drivable by a film transporting motor (23),
- the film-transporting motor (22) is fixedly secured to the apparatus carrier (6) of the reproduction apparatus, and
- the driven transporting roller (22) is able to be connected through the wall of the roll film cassette (3) with the film transporting motor (23).

5. A device according to one of Claims 1 to 4, characterised in that the shaft (16) of the film roll (15) in the roll film cassette (3) is able to be coupled with a winding motor (18), in order to transport the unwound film strip (25) back again if necessary into the roll film cassette (3) and to wind it onto the film roll (15).

6. A device according to one of Claims 1 to 5, characterised in that through constant excitation of the winding motor (18) a counter-rotational moment to the rotational moment of the film transporting motor (23) is able to be produced, in order to clamp the film strip (25) between film roll (15) and transporting rollers (22).

7. A device according to one of Claims 1 to 6, characterised in that - the roll film cassette (3) consists of a lower part (12) and a removable cover (13) closing in a light-tight manner, and
- in each case one roller of the sealing roller pair (21) and of the transporting roller pair (22) is mounted in the lower part (12) of the roll film cassette (3) and the other roller is mounted in the cover (13).

8. A device according to one of Claims 1 to 7, characterised in that
- the light-tight chamber (1) of the reproduction apparatus has a loading flap (2), closing in a light-tight manner and able to be locked, for the introduction of the roll film cassette (3),
- the apparatus carrier (6) inside the light-tight chamber (1) has a loading platform (5) for the depositing of the roll film cassette (3), and
- means (7;8;11) are present for aligning the roll film cassette (3) with respect to the recording drum (9) and for arresting the roll film cassette (9) on the apparatus carrier (6).

9. A device according to one of Claims 1 to 8, characterised in that the film cutting device (26) for the film strip (25) is constructed as a circular blade, which is movable in a rotating manner along the cutting line transversely to the film strip (25).

10. A device according to one of Claims 1 to 9, characterised in that the film length measuring device (32) consists of a measuring wheel (33) driven by the movement of the film strip (25), of a supporting wheel (34) pressing the film strip (25) against the measuring wheel in an elastic manner, and of a moment of momentum transmitter (35) coupled to the measuring wheel (33), which converts the rotation of the measuring wheel (33) into a series of cycles, in which the number of cycles is a measurement for the measured film length.

11. A device according to one of Claims 1 to 10, characterised in that
- the light-tight chamber (1) in the region of the lifting device (66) has a slit-shaped film outlet opening (67) for the exposed film sheets (25'),
- the lifting device (66) is provided with a film guiding duct (72) which, when the lifting finger (68) is swivelled against the recording drum (9), points towards the film outlet opening (67), and
- between the lifting device (66) and the film outlet opening (67) a further drivable film transporting pair of rollers (73) is provided, in order to transport the exposed film sheets (25') out of the light-tight chamber (1) through the film outlet opening (67).

12. A device according to one of Claims 1 to 11, characterised in that a receiver film cassette to receive the exposed film sheets (25') is connectable in a light-tight manner to the film outlet opening (67) of the light-tight chamber (1).

13. A device according to one of Claims 1 to 12, characterised in that the film transporting duct of a film developing station is connectable in a light-tight manner to the film outlet opening (67) of the light-tight chamber (1).

14. A device according to one of Claims 1 to 13, characterised in that a vacuum gauge (42) is connected into the suction line (41), which vacuum gauge (42) produces an electrical measurement signal for vacuum monitoring.

15. A device according to one of Claims 1 to 14, characterised in that the vacuum distributor (95;96;97;98) has the following components:
- a vacuum chamber (95) in the recording drum (9), which via one of the shaft journals (100) of the recording drum (9) communicates with the fixed vacuum pump (94),
- distributor lines (96) running substantially radially to the drum axis between the vacuum chamber (45) and the individual suction ducts (94),
- controllable valves (97) in the distributor lines (96) for the selective opening and closing of the distributor lines (96), and
- means (98;101;102;103;104) to control the valves (97) as a function of the rotational movement of the recording drum (9).

16. A device according to Claim 15, characterised in that the means (98;101;102;103;104) to control the valves (97) consist of the following components:
- a control disc (98) mounted on the shaft journal (100) of the recording drum (9), with a control finger (101) as actuating member to open and close the valves (97) arranged in a circular shape around the control disc (98),
- an arresting device (102;103;104) to block the control disc (98) in a given fixed position to the recording drum (9), in which the control disc (98) is mounted on the shaft journal (100) by a sliding fit such that the control disc (98) which is not blocked by the arresting device (102;103;104) is entrained by the shaft journal (100) of the rotating recording drum (9) without slippage.

17. A device according to Claim 16, characterised in that the arresting device (102;103;104) consists of an arresting pin (104) which is adjustable by a fixed adjusting element (103), which arresting pin (104) engages into a groove (102) situated on the control disc (98).

18. A device according to one of Claims 15 to 17,
characterised in that
- the valves (97) are controllable in each case by actuation of a control roller (115), attached to a plunger (113), by the control finger (101) of the control disc (98) into the operating position "open", in which the valves (97) assume their stable operating position "closed" without actuation of the control rollers (115) by the control finger (101).

19. A device according to one of Claims 1 to 18,
characterised in that
- the recording drum (9) is constructed as a hollow cylinder (37), in the wall (93) of which the suction ducts (94) run and the end faces of which are closed by disc-shaped covers (108), at least one of which has a central opening (108),
- the inner surface of the cover (108) pointing into the interior of the drum has grooves (110) running substantially radially,
- the outer surface of the cover (108) is provided with bores (11) arranged in a circular shape around the drum axis, which bores (111) open into the grooves (110), and in which the valves (97) are arranged,
- a cylindrical housing part (110) is attached to the inner surface of the cover (108) and with its extension (117) in the central opening (109) of the cover (108), in which the grooves (110) covered by the housing part (116) in an air-tight manner, in the cover (108) form the distributor lines (96) connected with the suction ducts (44),
- on the extension (117) of the housing part (116), projecting through the opening (109) of the cover (108), the shaft journal (100) is attached, which has the suction bore (99'),
- the interior of the housing part (116) forms the vacuum chamber (95), which communicates via the suction bore (99') in the housing part (116) with the suction bore (99) in the shaft journal (100),
- the end face of the housing part (116), directed towards the cover (108), has bores (110) arranged in a circular shape, which connect the vacuum chamber (95) with the grooves (110) and which are arranged so that they are closable by the valves (97), and
- the control disc (98) is mounted by means of a disc (122) on the extension (121) of the shaft journal (100).

20. A device according to one of Claims 1 to 19,
characterised in that
- the suction ducts (94) in the recording drum (9) have partition walls (126), whereby the recording drum (9) is divided into two separate vacuum zones (127;128), and
- a separately controllable vacuum distributor (128;130) is associated with each vacuum zone (127;128).

21. A device according to Claim 20, characterised in that the vacuum chamber (95') of one vacuum distributor (129) is connected via a pipe (131) running axially in the interior of the drum, with the vacuum chamber (95) of the other vacuum distributor (130).

22. A method of operation of a device for the automatic clamping of film material onto a recording drum of a reproduction apparatus arranged in a light-tight chamber, and for the releasing of the film material, exposed by a recording element, from the recording drum, which has suction hole rows in the surface running axially to the drum axis and connectable via a suction line to a fixed vacuum pump, in which
- the recording drum (9) is rotated by means of a positioning drive (54) into a clamping start position, film transporting means (22;23) are started and the film strip (25) is unwound from a film roller (15) of a roll film cassette (3) and is transported via a transporting and guiding surface (30;31) to the recording drum (9),
- the film transporting means (22;23) are stopped, when the start of the transported film strip (25) in the clamping start position lies in the region of a proof roller ( 62) of a proofing device (61) and in the region of a suction hole row (38') of the recording drum (9),
- the proof roller (62) of the proofing device (61) is lowered to press the start region of the film strip (25) onto the recording drum (9),
- the first suction hole row (38') is acted upon with vacuum by a vacuum distributor (95;96;97;98) and the start region of the film strip (25) is sucked,
- the film transporting means (22;23) and the positioning drive (54) are started for rotating the recording drum (9) and further film strip (25) is transported to the recording drum (9),
- during the drum rotation in succession further suction hole rows (38') are connected in in accordance with the increasing looping between the recording drum (9) and film strip (25) by the vacuum distributor (95;96;97;98) and are acted upon with vacuum for the clamping of the film strip (25),
- on clamping of the film strip (25) the film strip length is measured in a film length measuring device (32) and the film transporting means (22;23) and also the positioning drive (54) are stopped, when the end of the film sheet (25') of given length, which is to be cut off from the film strip (25), lies beneath a film cutting device (26),
- the film sheet (25') is cut off from the film strip (25) by the film cutting device (26), the remaining part of the film sheet (25') is clamped by means of the positioning drive (5 4) with gradual connecting-in of further suction hole rows (38') by the vacuum distributor (95;96;97;98),
- the connecting-in of further suction hole rows (38') by the vacuum distributor (95;96;97;98) is terminated according to the respective circumferential length of the film sheet (25') at the suction hole row (38') on which the end region of the film sheet (25') lies, and then the proof roller (62) of the proofing device (61) is lifted from the recording drum (9),
- the clamped film sheet (25') is exposed by dot and line by the recording element (48),
- after exposure, the recording drum (9) is rotated by the positioning drive (54) into a release start position, in the release start position the proof roller (62) of the proofing device (61) and a lifting finger (68) of a lifting device (66) are lowered onto the recording drum (9),
- the exposed film sheet (25') is peeled off from the drum surface by rotation of the recording drum (9) by means of the lowered lifting finger (68) and
- the suction hole rows (38') acted upon with vacuum during the clamping of the film sheet (25') are disconnected again by the vacuum distributor (95;96;97;98) and the recording drum (9) is rotated into the clamping start position.

23. A method of operation of the device according to Claim 22, characterised in that
- after the fixing of the start of the film strip (25) on the recording drum (9), only the film transporting means (22;23) are started and by subsequent pushing of additional film strip (25) from the roll film cassette (3) in the start region of the film strip (25) a film loop of given length is formed, and
- after formation of the film loop (86) the positioning drive (54) is started for rotation of the recording drum (9) and further film strip (25) is transported to the recording drum and clamped, with the formed film loop (86) being maintained.

24. A method of operation of the device according to Claim 22 or 23, characterised in that the nominal value of the vacuum, provided for the exposure phase, is lowered by opening the auxiliary air valve (43) for the duration of the clamping phase, whereby the film sheet (25) is sucked with reduced underpressure.

25. A method of operation of the device according to one of Claims 22 to 24, characterised in that the actual value and the reduced actual value for the vacuum are measured by means of the vacuum gauge (42), the measured actual values are compared with nominal values, and if the measured actual values do not reach the nominal values, the processes carried out hitherto are cancelled and the film strip (25) is transported back again into the roll film cassette (3).

26. A method of operation of the device according to one of Claims 22 to 25, characterised in that the length of the film strip (25), which runs through the film length measuring device (32), is measured and the measured film length is compared continuously with the constant distance between the film length measuring device (32) and the clamping mark (84) in the clamping start position of the recording drum (9), and that the film transporting means (22;23) are stopped when equality is reached, in which the start of the film strip (25) is situated on the clamping mark (84).

27. A method of operation of the device according to one of Claims 22 to 26, characterised in that the length of the additionally transported film strip (25) is measured in the film length measuring device (32) and the measured film length is compared with a given length for the film loop (86), and that the film transporting means (22;23) are stopped when equality is reached.

28. A method of operation of the device according to one of Claims 22 to 27, characterised in that on clamping of the film strip (25), the measuring of the film strip length is continued in the film length measuring device (32), starting from the film length measured hitherto, and the film length measured at that moment is compared with the given length for the film sheet (25') to be clamped in each case, taking into account the constant distance between the film length measuring device (32) and the film cutting device (26), and that when equality is reached the film transporting means (22;23) and the positioning drive (54) are stopped, in which the end of the film sheet (25'), which is to be cut off from the film strip (25), lies under the film cutting device (26).

## Revendications

1. Dispositif de tension automatique d'un matériau en film sur le tambour d'enregistrement d'un appareil de reproduction et de tension de matériau de film exposé par l'organe d'enregistrement, où le tambour d'enregistrement (9) est implanté dans une chambre à l'abri de la lumière, la surface d'enveloppe du tambour d'enregistrement (9) présente des trous d'aspiration (38') pour fixer sous vide le matériau de film (25'), qui sont disposés en rangés de trous d'aspiration s'étendant axialement par rapport à l'axe du tambour et où les rangées de trous d'aspiration (38') peuvent être branchés à une pompe à vide (44) fixe, caractérisé par:
- une cassette de film en bobine (3) munie d'un orifice de passage de film (14), obturable, étanche à la lumière, en forme de fente, contenant le matériau de film sous forme de bobine de film (15) pouvant tourner, qu'on peut insérer dans la chambre à l'abri de la lumière (1) de l'appareil de reproduction et qu'on peut y fixer, où l'orifice de passage du film (14) est dirigé vers le tambour d'enregistrement (9)et s'étend axialement par rapport à lui,
- une surface de glissement et de transfert (30, 31)disposée entre l'orifice de passage du film (14) de la cassette de film en bobine (3) et le tambour d'enregistrement (9) qui, dans le domaine du tambour d'enregistrement (9) s'étend essentiellement tangentiellement à celui-ci, par la bande de film (25) déroulée depuis la bobine de film (15),
- un moyen de transfert de film (22, 23) pour transférer la bande de film (25) depuis la cassette de film en bobine (3) vers le tambour d'enregistrement (9),
- un dispositif de coupe de film (26) disposé entre la cassette de film en bobine (3) et le tambour d'enregistrement (9) pour couper une feuille de film (25') à exposer de longueur prescrite dans la bande de film (25),
- un dispositif de mesure de longueur de film (32) placé entre le tambour d'enregistrement (9) et la cassette de film en bobine (3) pour mesurer chaque longueur de bande de film déroulée (25),
- un dispositif d'appui (61) avec un rouleau d'appui (62) qui peut pivoter dans le domaine du tambour d'enregistrement (9) où le début de la feuille de film (25) transféré vers le tambour d'enregistrement (9) via la surface de glissement et de transfert (30, 31) vient au contact de la surface du tambour,
- un entraînement de positionnement (54) pour faire tourner le tambour d'enregistrement (9) dans une position de départ de tension, exposition et relâchement,
- un dispositif de relevage (66) avec un doigt de relevage (68) pivotable à proximité du tambour d'enregistrement (9) pour décoller chaque feuille de film (25') exposée du tambour d'enregistrement (9),
- des canaux d'aspiration (94) s'étendant axialement par rapport à l'axe de tambour dans le tambour d'enregistrement (9) qui font communiquer chacun des trous d'aspiration (38) avec les autres d'une rangée de trous d'aspiration (38') et
- un répartiteur de vide (95, 96, 97, 98) commandé par le mouvement de rotation du tambour d'enregistrement (9) qui relie chaque canal d'aspiration (94) par une conduite d'aspiration (41) à une pompe à vide (44) fixe, où le répartiteur de vide (95, 96, 97, 98) est réglable de telle sorte que lors du processus de tension, on met d'abord sous vide les rangées de trous d'aspiration (38') qui correspondent au domaine de début de la feuille de film (25'), puis ensuite d'autres rangées de trous d'aspiration (38') sont branchées en fonction de l'enroulement de la feuille de film (25') sur le tambour d'enregistrement (9) et le branchement d'autres rangées de trous d'aspiration (38') en fonction de la longueur périmétrique de la feuille de film à tendre (25) se termine à la rangée de trous d'aspiration (38') où repose le domaine terminal de la feuille de film (25').

2. Dispositif selon la revendication 1, caractérisé en ce que dans la conduite d'aspiration (41) se trouve une vanne d'évent (43) pour diminuer le niveau de vie pendant la tension et/ou le décollement du matériau de film.

3. Dispositif selon la revendication 1' ou 2, caractérisé en ce que la cassette de film en bobine (3) présente des rouleaux d'étanchéité dans le domaine de l'orifice (14) de passage du film du dessus et en dessous de la bande de film (21) pour assurer l'étanchéité vis-à-vis de la lumière, dont la longueur correspond au moins à la longueur de l'orifice de passage du film (14).

4. Dispositif selon l'une des revendications 1 à 3, caractérisé en ce que :
- les moyens de transfert de film (22, 23) sont constitués de rouleaux de transfert (22) disposés au-dessus et au-dessous de la bande de film (23) dans la cassette de film en bobine (3), dont au moins l'un est entraînable par le moteur de transfert de film (23),
- le moteur de transfert de film (22) est fixé sur le châssis d'appareil (6) de l'appareil de reproduction, et
- on peut relier le rouleau de transfert entraîné (22) à travers la paroi de la cassette de film en bobine (3) au moteur de transfert de film (23).

5. Dispositif selon l'une des revendications 1 à 4, caractérisé en ce qu'on peut coupler l'arbre (16) de la bobine de film (15) dans la cassette de film en bobine (3) à un moteur enrouleur (18), pour pouvoir le cas échéant retransférer la bande de film déroulée (25) dans la cassette de film en bobine (3) et la rebobiner sur la bobine de film (15).

6. Dispositif selon l'une des revendications 1 à 5, caractérisé en ce que par excitation permanente du moteur enrouleur (18), on produit un mouvement entraîné au couple opposé de rotation du moteur de transfert de film (23), pour tendre la bande de film (25) entre la bobine de film (15) et les rouleaux de transfert (22).

7. Dispositif selon l'une des revendications 1 à 6, caractérisé en ce que :
- la cassette de film en bobine (3) est constituée d'une pièce inférieure (12) et d'un couvercle amovible étanche à la lumière (13), et
- respectivement l'un des rouleaux de la paire de rouleaux d'étanchéité (21) et de la paire de rouleaux de transfert (22) est logée dans la partie inférieure (12) de la cassette de film en bobine (3) et l'autre rouleau est logé dans le couvercle (13).

8. Dispositif selon l'une des revendications 1 à 7, caractérisé en ce que :
- la branche étanche à la lumière (1) de l'appareil de reproduction présente un volet de charge (2) verrouillable et fermant de manière étanche à la lumière, pour introduire la cassette de film en bobine (3),
- le châssis d'appareil (6) à l'intérieur de la chambre étanche à la lumière (1) présente une plate-forme de charge (5) pour déposer la cassette de film en bobine (3), et
- des moyens (7, 8, 11) existent pour régler la cassette de film en bobine (3) par rapport au tambour d'enregistrement (5) et pour fixer la cassette de film en bobine (9) sur le châssis d'appareil (6).

9. Dispositif selon l'une des revendications 1 à 8, caractérisé en ce que le dispositif de coupe de film (26) de la bande de film (25) est en forme de couteau circulaire qui est mobile et tourne le long de la ligne de coupe transversalement à la bande de film (25).

10. Dispositif selon l'une des revendications 1 à 9, caractérisé en ce que le dispositif de mesure des longueurs de film (32) est constitué d'une roue de mesure (33) entraînée par le déplacement de la bande de film (25), d'une roue d'appui (34) appliquant de manière élastique la bande de film (25) sur la roue de mesure et d'un émetteur d'impulsions de rotation (35) couplé à la roue de mesure (33) qui transforme la rotation de la roue de mesure (33) en une succession d'impulsions, où le nombre d'impulsions est une mesure de la longueur de film.

11. Dispositif selon l'une des revendications 1 à 10, caractérisé en ce que :
- la chambre (1) étanche à la lumière dans le domaine du dispositif de relevage (66) présente un orifice de sortie du film en forme de fente (67) pour les feuilles de film exposées (25'),
- le dispositif de relevage (66) est muni d'un canal conducteur de film (72) qui s'oriente vers l'orifice de sortie de film (67) quand le doigt de relevage (68) est pivoté vers le tambour d'enregistrement (9), et
- entre le dispositif de relevage (66) et l'orifice de sortie de film (67) on prévoit une autre paire de rouleaux de transfert de film entraînables (73), pour faire sortir les feuilles de film exposées (25') de la chambre (1) à l'abri de la lumière par l'orifice de sortie du film (67).

12. Dispositif selon l'une des revendications 1 à 11, caractérisé en ce qu'à l'orifice de sortie de film (67) de la chambre à l'abri de la lumière (1), on peut connecter en continuité une cassette de film preneuse pour recevoir à l'abri de la lumière les feuilles de film exposées (25').

13. Dispositif selon l'une des revendications 1 à 12, caractérisé en ce qu'on peut connecter à l'orifice de sortie du film (67) de la chambre (1) à l'abri de la lumière, le canal de transfert de film à l'abri de la lumière d'un poste de développement de film.

14. Dispositif selon l'une des revendications 1 à 13, caractérisé en ce que sur la conduite d'aspiration (41) se trouve un appareil de mesure de vide (42) qui délivre un signal de mesure pour surveiller le niveau de vide.

15. Dispositif selon l'une des revendications 1 à 14, caractérisé en ce que le répartiteur de vide (95, 96, 97, 98) présente les composants suivants :
- une chambre à vide (95) dans le tambour d'enregistrement (9) qui est en communication par l'un des tourillons d'arbre (100) du tambour d'enregistrement (9) avec la pompe à vide (94) fixe,
- des conduites de répartiteur (96) s'étendant essentiellement radialement par rapport à l'axe du tambour entre la chambre à vide (45) et chacun des canaux d'aspiration (94),
- des vannes réglables (97) dans les conduites de répartiteur (96) pour ouvrir et fermer sélectivement les conduites de répartiteur (96), et
- des moyens (98, 101, 102, 103, 104) pour commander les vannes (97) en fonction du mouvement de rotation du tambour d'enregistrement (9).

16. Dispositif selon la revendication 15, caractérisé en ce que les moyens (98, 101, 102, 103, 104) pour commander les vannes (97) sont constitués des composants suivants :
- un disque de commande (98) logé sur le tourillon d'arbre (100) du tambour d'enregistrement (9) avec un doigt de commande (101) comme organe d'actionnement pour ouvrir ou fermer les vannes (57) disposées en cercle autour du disque de commande (98),
- un dispositif de blocage (102, 103, 104) pour bloquer le disque de commande (98) dans une position fixe préétablie par rapport au tambour d'enregistrement, où le disque de commande (98) est logé sur le tourillon d'arbre (100) par glissement, de telle sorte que le disque de commande (98) non bloqué par le dispositif de blocage (102, 103, 104) est entraîné par le tourillon d'arbre (100) du tambour d'enregistrement (9) en rotation sans patinage.

17. Dispositif selon la revendication 16, caractérisé en ce que le dispositif de blocage (102, 103, 104) est constitué d'une tige de blocage (104) réglable par un organe de réglage (103) fixe, qui vient en prise dans une rainure (102) se trouvant sur le disque de commande (98).

18. Dispositif selon l'une des revendications 15 à 17, caractérisé en ce qu'on peut régler les vannes (97) chaque fois par actionnement d'un galet de commande (115) fixé sur un coulisseau (113) par le doigt de commande (101) du disque de commande (98) dans la position de travail « ouverte », où les vannes (97) prennent leur position de travail « fermée » stable sans actionnement des galets de commande (115) par le doigt de commande (101).

19. Dispositif selon l'une des revendications 1 à 18, caractérisé en ce que :
- le cylindre d'enregistrement (9) est en forme de cylindre creux (37), dans la paroi (93) duquel passent les canaux d'aspiration (94) et dont les faces frontales sont fermées par des couvercles (108) en forme de disque, dont au moins un présente un orifice central (108),
- la face externe du couvercle (108) est munie de trous (111) qui débouchent dans les rainures (110) et où sont placées les vannes (97),
- une pièce de boîtier (110) cylindrique est fixée sur la face interne du couvercle (108) et avec son prolongement (117) dans l'orifice central (109) du couvercle (108) où les rainures (110) recouvertes de manière étanche à l'air par la pièce de boîtier (116) dans le couvercle (108) forment les conduites de répartiteur (96) reliées aux canaux d'aspiration (44),
- le tourillon d'arbre (100) est fixé sur le prolongement (117) de la pièce de boîtier (116) dépassant par l'orifice (109) du couvercle (108) et il présente le trou d'aspiration (99'),
- la chambre interne de la pièce de boîtier (116) forme la chambre à vide (95), qui communique par le trou d'aspiration (99') dans la pièce de boîtier (116) avec le trou d'aspiration (99) dans le tourillon d'arbre (100),
- la face frontale de la pièce de boîtier (116) dirigée vers le couvercle (108) présente des trous (110) disposés en cercle, qui relient la chambre à vide (95) avec les rainures (110) et sont disposés de telle façon qu'ils sont obturables par les vannes (97),
- le disque de commande (98) est logé au moyen d'une rondelle (122) sur le prolongement (121) du tourillon d'arbre (100).

20. Dispositif selon l'une des revendications 1 à 19, caractérisé en ce que :
- les canaux d'aspiration (94) dans le tambour d'enregistrement (9) présentent des parois de séparation (126), ce qui divise le tambour d'enregistrement (9) en deux domaines de vide distincts (127, 128), et
- à chaque domaine de vide (127, 128) correspond un répartiteur de vide commandable séparément (128, 130).

21. Dispositif selon la revendication 20, caractérisé en ce que la chambre à vide (95') de l'un des répartiteurs de vide (129) est reliée par un tuyau (131) s'étendant axialement dans la chambre interne de tambour à la chambre à vide (95) de l'autre répartiteur de vide (130).

22. Mode de fonctionnement d'un dispositif pour tendre automatiquement du matériau de film sur un tambour d'enregistrement implanté dans une chambre étanche à la lumière d'un appareil de reproduction et pour décoller le matériau de film exposé par un organe d'enregistrement du tambour d'enregistrement qui présente dans la surface d'enveloppe axialement par rapport à l'axe du tambour des rangées de trous d'aspiration connectables par une conduite d'aspiration à une pompe à vide fixe, où
- le tambour d'enregistrement (9) est tourné au moyen d'un entraînement de positionnement (54) dans une position de départ de tension, des moyens de transfert de film (22, 23) sont enclenchés et on déroule la bande de film (25) d'une bobine de film (15) de cassette de film en bobine (3) et on la transfère par une surface de transfert et de guidage (30, 31) vers le tambour d'enregistrement (9),
- on arrête les moyens de transfert de film (22, 23) quand le début de la bande de film transférée (25) vient en position de départ de tension dans la zone d'un rouleau d'appui (62) d'un dispositif d'appui (61) et dans le domaine d'une rangée (38') de trous d'aspiration du tambour d'enregistrement (9),
- on abaisse le rouleau d'appui (62) du dispositif d'appui (61) pour appliquer la zone initiale de la bande de film (25) sur le tambour d'enregistrement (9),
- la première rangée de trous d'aspiration (38') est mise sous vide par un répartiteur de vide (95, 96, 97, 98) et on aspire la zone de début de la bande de film (25),
- on enclenche les moyens de transfert de film (22, 23) et l'entraînement de positionnement (54) pour faire tourner le tambour d'enregistrement (9) et on transfère la suite de la bande de film (25) vers le tambour d'enregistrement (9),
- pendant la rotation du tambour, on ouvre d'autres rangées de trous d'aspiration successivement (38') en fonction de l'avancement de l'enroulement entre le tambour d'enregistrement (9) et la bande de film (25) via le répartiteur de vide (95, 96, 97, 98) et pour plaquer la bande de film (25) on met sous vide,
- lors de l'application de la bande de film (25) on mesure la longueur de bande de film dans un dispositif de mesure de longueur de film (32) et on arrête les moyens de transfert de film (22, 23) ainsi que l'entraînement de positionnement (54) quand la fin de la feuille de film (25') à couper dans la bande de film (25) à la longueur prescrite repose sous un dispositif de coupe de film (26),
- on découpe la feuille de film (25') par le dispositif de coupe de film (26) dans la bande de film (25), la partie restante de la feuille de film (25') est appliquée au moyen de l'entraînement de positionnement (54) par branchement pas à pas d'autres rangées de trous d'aspiration (38') par le répartiteur de vide (95, 96, 97, 98),
- le branchement d'autres rangées de trous d'aspiration (38') par le répartiteur de vide (95, 96, 97, 98) est terminé en fonction de la longueur périmétrique de la feuille de film (25') par la rangée de trous d'aspiration (38') où repose la zone terminale de la feuille de film (25'), et ensuite on relève le rouleau d'appui (62) du dispositif d'appui (61) du tambour d'enregistrement (9),
- la feuille de film appliquée (25') est exposée par point et par ligne par l'organe d'enregistrement (48),
- après l'exposition, le tambour d'enregistrement (9) est tourné par l'entraînement de positionnement (54) dans une position de départ de décollage, dans la position de départ et de décollage, on abaisse sur le tambour d'enregistrement (9) le rouleau d'appui (62) du dispositif d'appui (61) et un doigt de décollage (68) d'un dispositif de décollage (66),
- la feuille de film (25') exposée par rotation du tambour d'enregistrement (9) est décollée de la surface du tambour par le doigt de décollage (68) abaissé et
- les rangées de trous d'aspiration (38') mises sous vide lors de l'application de la feuille de film (25') par le répartiteur de vide (95, 96, 97, 98) sont à nouveau déconnectés et on tourne le tambour d'enregistrement (9) en position de départ et de tension.

23. Mode de fonctionnement du dispositif selon la revendication 22, caractérisé en ce que :
- seulement après la fixation du début de la bande de film (25) sur le tambour d'enregistrement (9), on démarre les moyens de transfert de film (22, 23) et après émission de bande de film supplémentaire (25) par la cassette de film en bobine (3), on forme dans le domaine initial de la bande de film (25) une boucle de film de longueur prescrite, et
- après formation de la boucle de film (86) on démarre l'entraînement de positionnement (54) pour faire tourner le tambour d'enregistrement (9) et on transfère du film supplémentaire (25) en conservant la boucle de film formée (86) vers le tambour d'enregistrement (9) et on tend.

24. Mode de fonctionnement du dispositif selon la revendication 22 ou 23, caractérisé en ce qu'on abaisse le niveau de vide prévu à la phase d'exposition par ouverture de la vanne d'évent (43) pendant la durée de la phase d'application, ce qui aspire la feuille de film (25) avec une dépression moins importante.

25. Mode de fonctionnement du dispositif selon l'une des revendications 22 à 24, caractérisé en ce qu'on mesure la valeur réelle et la valeur réelle réduite du vide au moyen de l'appareil de mesure de vide (42), on compare la valeur réelle aux valeurs nominales et si les valeurs réelles mesurées n'atteignent pas les valeurs nominales, on répète les processus réalisés jusqu'ici en sens inverse et la bande de film (25) est rebobinée dans la cassette de film en bobine (3).

26. Mode de fonctionnement du dispositif selon l'une des revendications 22 à 25, caractérisé en ce qu'on mesure la longueur de bande de film (25) qui traverse le dispositif de mesure de longueur de film (32) et on compare constamment la longueur de film mesurée et l'intervalle constant entre le dispositif de mesure de longueur de film (32) et la marque de tension (84) en position de départ-tension du tambour d'enregistrement (9) et qu'on arrête les moyens de transfert de film (22, 23) quand on atteint l'égalité, le début de la bande de film (25) se trouve sur la marque de tension (84).

27. Mode de fonctionnement du dispositif selon l'une des revendications 22 à 26, caractérisé en ce qu'on mesure la longueur de la bande de film (25) transférée en plus dans le dispositif de mesure de largeur de film (32) et on compare la longueur de film mesurée à une longueur prescrite pour la bande de film (86) et en cas d'égalité on arrête les moyens de transfert de film (22, 23).

28. Mode de fonctionnement du dispositif selon l'une des revendications 22 à 27, caractérisé en ce que lors de la tension de la bande de film (25) on continue de mesurer la longueur de bande de film dans le dispositif de mesure de longueur de film (32) en partant de la longueur de film mesurée jusque là et on compare la longueur de film instantanée mesurée à la longueur prescrite pour chaque feuille de film à tendre (25') en tenant compte de l'intervalle constant entre le dispositif de mesure de longueur de film (32) et le dispositif de coupe de film (26) et qu'en cas d'égalité on arrête les moyens de transfert de film (22, 23) et l'entraînement de positionnement (54), où l'extrémité de la feuille de film (25') à couper dans la bande de film (25) se trouve sous le dispositif de coupe du film (26).
